(19) Europäisches Patentamt / European Patent Office / Office européen des brevets

(11) **EP 3 438 635 B1**

(12) **EUROPEAN PATENT SPECIFICATION**

(45) Date of publication and mention
of the grant of the patent:
**29.10.2025 Bulletin 2025/44**

(21) Application number: **18186252.5**

(22) Date of filing: **30.07.2018**

(51) International Patent Classification (IPC):
*G01M 11/02* *(2006.01)*     *G02C 13/00* *(2006.01)*

(52) Cooperative Patent Classification (CPC):
**G01M 11/0214; G01M 11/0235; G01M 11/0242;**
G02C 13/005

(54) **GLASSES MEASUREMENT APPARATUS**

GLÄSERMESSVORRICHTUNG

APPAREIL DE MESURE DE VERRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2017   JP 2017148101
31.07.2017   JP 2017148102**

(43) Date of publication of application:
**06.02.2019   Bulletin 2019/06**

(73) Proprietor: **Nidek Co., Ltd.
Gamagori-shi,
Aichi, 443-0038 (JP)**

(72) Inventors:
• **TOCHIKUBO, Yujiro**
**Gamagori**
**Aichi (JP)**
• **KAJINO, Tadashi**
**Gamagori**
**Aichi (JP)**

(74) Representative: **Hoefer & Partner Patentanwälte
mbB
Pilgersheimer Straße 20
81543 München (DE)**

(56) References cited:
**WO-A1-2006/029875     DE-A1- 102015 220 931
US-A- 5 855 074**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

This disclosure relates to a glasses measurement apparatus that measures optical properties of a lens of glasses.

BACKGROUND

A lensmeter has been known as an example of a glasses measurement apparatus. The lensmeter projects measurement light to a lens and causes a light receiving element to receive measurement light transmitted through the lens, thereby measuring optical properties (for example, refractive power or the like) of the lens to be examined (see JP-A-2008-241694). Another such apparatus, which is adapted to measure optical properties of a lens of glasses, is further known from document US 5,855,074 A, from document DE 10 2015 220931 A1, or from document WO 2006/029875 A1.

Incidentally, when glasses are worn, a width between right and left temple portions of a frame changes depending on a head width of a wearer. If the glasses are worn, the temple portions grip the head of the wearer, and a reaction force to the grip causes the glasses to be deformed. In addition, when the glasses are worn, a pantoscopic angle of the glasses changes with respect to a front surface of an eyeball of the wearer due to a height of ear of the wearer, a type of glasses, a thickness or a weight of a lens framed in a rim portion of the glasses, or the like.

When glasses are prepared, it is desirable to perform measurement of a lens in consideration of a shape of glasses when the glasses are worn. However, the lensmeter in the related art does not perform measurement of a lens in consideration of a change in width between the temple portions, a pantoscopic angle, or the like which occurs when the glasses are worn. When the glasses produced to have a lens processed and prepared by using a measured value acquired in the above state are worn, a problem or the like arises in that a vision condition is not obtained as is prescribed, and the glasses are not good for a wearer, in some cases.

SUMMARY

An object of this disclosure is to provide a glasses measurement apparatus that is capable of measuring optical properties of a lens depending on a wearing state of glasses.

This object is solved by the features of the independent claim. The dependent claims contain advantageous embodiments of the present invention. This disclosure includes the following aspects.

According to independent claim 1 of the present invention a measurement apparatus is disclosed.

BRIEF DESCRIPTION OF DRAWINGS

Fig. 1 is a view showing glasses.
Fig. 2 is a view showing a schematic configuration of a glasses measurement apparatus.
Fig. 3 is a view showing an optical system in the glasses measurement apparatus.
Fig. 4 is a perspective view of the glasses measurement apparatus.
Fig. 5 is a right-side view of the glasses measurement apparatus.
Fig. 6 is a left-side view of the glasses measurement apparatus.
Fig. 7 is a front view of the glasses measurement apparatus.
Fig. 8 is a rear view of the glasses measurement apparatus.
Fig. 9 is a diagram showing a control system in the glasses measurement apparatus.
Fig. 10 is a diagram illustrating a barycentric position of the glasses.
Fig. 11 is a view showing an example of balance information.
Fig. 12 is a diagram showing a wearing state in which a wearer is wearing the glasses.
Fig. 13 is a diagram showing a relationship between a cornea apex distance and a refractive power.

DETAILED DESCRIPTION

<Overview>

Hereinafter, embodiments of this disclosure will be described with reference to the figures. In this disclosure, L and R assigned to reference signs indicate that an item is used for a left side and a right side, respectively. In addition, in this disclosure, a meaning of being parallel includes a perfectly parallel state and a substantially parallel state. In addition, in this disclosure, a meaning of being perpendicular includes a perfectly perpendicular state and a substantially perpendicular state. In addition, in this disclosure, a meaning of being equal includes a perfectly equal state and a substantially equal state. The following chapters classified by < > are used individually or in association with each other.

In this disclosure, a front side, a rear side, an upper side, and a lower side of the glasses are sides in directions defined on the basis of a state in which a wearer is wearing the glasses. That is, the front side of the glasses is a side on which a rim is positioned, and the rear side of the glasses is a side on which a temple tip is positioned. In addition, the upper side of the glasses is a side of an upper end of the rim, and the lower side of the glasses is a side of a lower end of the rim. In addition, in a glasses measurement apparatus according to this disclosure, a depth direction (front-rear direction) of the apparatus is referred to as a Z direction, a horizontal direction (left-right direction) on a plane perpendicular to the depth direction is referred to as an X direction, and a vertical direction (up-down direction) on the plane perpendicular to the depth direction is referred to as a Y direction.

For example, the glasses measurement apparatus (for example, a glasses measurement apparatus 1) according to the example detects a fitting state of glasses (for example, glasses F). In addition, the glasses measurement apparatus measures optical properties of a lens (for example, a lens LE), for example. The optical properties of the lens may be spherical power S, cylindrical power C, an astigmatism axis angle A, a prism amount $\Delta$, or the like.

For example, the glasses measurement apparatus includes a lens measuring portion (for example, a measurement optical system 10). In addition, the glasses measurement apparatus includes a supporting portion (for example, a glasses supporting unit 3), for example. In addition, the glasses measurement apparatus includes a measuring portion (for example, a measuring unit 4), for example. In addition, the glasses measurement apparatus includes an acquiring portion (for example, a control unit 60), for example. In addition, the glasses measurement apparatus includes a drive unit (for example, a drive unit 5), for example. In addition, the glasses measurement apparatus includes an adjusting portion (for example, a pantoscopic angle adjusting mechanism 5b and a temple adjusting unit 100), for example.

For example, the lens measuring portion measures the optical properties of the lens of the glasses having the wearing state reproduced by the adjusting portion. For example, the lens measuring portion may be configured to project measurement light to a lens, cause a light receiving element (for example, a light receiving element 14) to receive measurement light having passed through the lens and an index plate (for example, an index plate 13), and measure the optical properties of the lens. For example, at least a light receiving element and a light source (for example, a light source 11) may be provided as the lens measuring portion. In this case, the lens measuring portion may include the index plate, for example. In addition, the lens measuring portion may include a condenser lens (for example, a condenser lens 12), for example.

For example, the supporting portion supports the glasses. For example, the supporting portion supports the glasses at two or more positions. For example, in this case, the supporting portion may be configured to support at two or more positions including a position of a front region of the glasses and a position of a rear region of the glasses. For example, the position of the front region of the glasses may be a position on the front side from a center position which is obtained in a state in which the wearer is wearing the glasses. That is, the position of the front region of the glasses may be a bridge (for example, a bridge FB), rims (for example, rims FR) or the like of the glasses. In addition, the position of the rear region of the glasses may be a position on the rear side from the center position which is obtained in the state in which the wearer is wearing the glasses, for example. That is, the position of the rear region of the glasses may be a temple (for example, a temple FT), a temple tip (for example, a temple tip FM) or the like of the glasses.

For example, the measuring portion may be disposed in the vicinity of or inside the supporting portion. That is, the measuring portion may also serve as the supporting portion such that the measuring portion and the supporting portion may be integrally provided. It is needless to say that the measuring portion may be configured to be separately provided from the supporting portion. For example, it is possible to use measurement sensors (for example, a measurement sensor 4a, a measurement sensor 4b, and a measurement sensor 4c), which are capable of measuring a weight, as the measuring portion. For example, the sensor may be a pressure sensor. In addition, the sensor may be a weight sensor, for example. For example, the measuring portion for measuring the weight of the glasses is disposed at the same position as that of the supporting portion for supporting the glasses, and thereby an operator can acquire a weight of the glasses at a position at which the glasses are supported, in a simple configuration.

<Measuring Portion>

For example, the measuring portion measures the weight of the glasses at two or more positions (for example, two positions, three positions, four positions, or the like) of the glasses. For example, in this case, the measuring portion measures a weight at two or more positions including the position of the front region of the glasses and the position of the rear region of the glasses. The weight may be measured at a position of the bridge of the glasses as the position of the front region of the glasses. In this case, the position of the bridge may be any position of a bridge portion, the center of the bridge, or an end of the bridge. In addition, the weight may be measured at a position of the temple tip of the glasses as the position of the rear region of the glasses. In this case, the position of the temple tip may be any position of a temple tip portion, the center of the temple tip, or an end of the temple tip.

For example, the measuring portion may be configured to measure the weight at both of a left temple tip of the glasses and a right temple tip of the glasses as the position of the temple tip of the glasses. In addition, the measuring portion may be configured to measure the weight at one position of the left temple tip of the glasses and the right temple tip of the glasses as the position of the temple tip of the glasses. For example, in this case, the glasses are considered to have substantially bilateral symmetry, and thus one weight at the right and left temple tips may be substantially equal to the other weight at the right and left temple tips. Consequently, the weight at the position of the bridge of the glasses and the weight at the right temple tip and the weight at the left temple tip of the glasses may be all acquired, and the center of gravity of the entire glasses may be accurately obtained from the weight at three points.

<Acquiring Portion>

For example, the acquiring portion acquires a barycentric position of the glasses based on the weight measured by the measuring portion. For example, the acquiring portion may acquires balance information of the glasses based on the barycentric position of the glasses, after the barycentric position of the glasses is acquired. For example, the balance information may be information indicating a balance position of the glasses. In this case, the balance information may include the balance position of the glasses, for example. In addition, for example, the balance information may include an ideal balance position of the glasses, for example. In addition, for example, the balance information may include a mean balance position of the glasses, for example.

For example, the glasses measurement apparatus may include an output portion (for example, a display 72) that outputs the balance information of the glasses. For example, the output portion may be configured to output the balance information by displaying the information on a display or the like. In addition, the output portion may be configured to output the balance information by performing printing by using a printer or the like, for example. In addition, the output portion may be configured to output the balance information as data to an external memory or the like, for example. Consequently, an operator can easily determine the barycentric position, the balance or the like of the glasses.

For example, the measuring portion measures the weight of the glasses at two or more positions of the glasses, and the acquiring portion acquires the barycentric position of the glasses based on the weights. In this manner, the operator can obtain the center of gravity of the entire glasses and easily adjusts the barycentric position, the balance, or the like of the glasses. In addition, the operator can determine a fitting state of the glasses on a wearer based on the center of gravity of the glasses such that the operator can adjust the barycentric position of the glasses that the wearer possesses or prescribe glasses having a barycentric position appropriate to a wearer, for example.

<Adjusting Portion>

For example, the adjusting portion adjusts at least one of deformation of the glasses and a pantoscopic angle of the glasses and reproduces a wearing state in which the glasses are worn by a wearer. It is needless to say that the adjusting portion may be configured to automatically or manually adjust the deformation and the pantoscopic angle of the glasses. For example, in a case of automatic adjustment, a head width acquiring portion (for example, a control unit 60) for acquiring head width information of a wearer may be provided. In addition, in the case of automatic adjustment, a pantoscopic angle acquiring portion (for example, the control unit 60) for acquiring the pantoscopic angle of the glasses may be provided, for example. For example, in a case of manual adjustment, a scale or the like may be provided on the adjusting portion, and thus the operator may adjust the deformation or the pantoscopic angle of the glasses based on the scale. For example, such a configuration enables the operator to reproduce the wearing state in which the wearer is wearing the glasses such that the optical properties of the lens of the glasses can be measured. Hence, it is possible to obtain a measurement result with high accuracy in a state close to the wearing state.

<Pantoscopic Angle Adjusting Portion>

For example, the adjusting portion includes a pantoscopic angle adjusting portion (for example, the pantoscopic angle adjusting mechanism 5b) for moving, in an up-down direction, at least one position of the position of the front region of the glasses and the position of the rear region of the glasses and changing the pantoscopic angle. For example, the pantoscopic angle is a tilt angle of the glasses in a state in which a wearer is wearing the glasses. For example, the pantoscopic angle adjusting portion tilts the glasses forward. Consequently, it is possible to change the tilt angle of the glasses in a state in which a wearer is wearing the glasses, (that is, the pantoscopic angle of the glasses). For example, a deviation in the pantoscopic angle significantly influences the optical properties of the lens; however, the wearing state is reproduced, and thereby it is possible to obtain the measurement result with high accuracy.

For example, the pantoscopic angle adjusting portion may move, in the up-down direction, at least one position of the position of the front region of the glasses and the position of the rear region of the glasses and change the pantoscopic angle. For example, the pantoscopic angle adjusting portion moves, in the up-down direction, at least one position of the position of the bridge (for example, the bridge FB) of the glasses as the position of the front region of the glasses and the position of the temple (for example, a temple FTL or a temple FTR) of the glasses as the position of the rear region of the glasses. The pantoscopic angle adjusting portion may be configured to move, in the up-down direction, at least one position of the position of the bridge of the glasses as the position of the front region of the glasses and the position of the temple tip (for example, a temple tip FML or a temple tip FMR) of the glasses as the position of the rear region of the glasses. Consequently, it is possible to change a pantoscopic angle of the glasses to the pantoscopic angle in the state in which the wearer is wearing the glasses.

For example, such a configuration makes it possible to change the pantoscopic angle of the glasses in a simple configuration. In addition, when the wearer is wearing the glasses, the configuration makes it possible to reproduce the pantoscopic angle of the glasses which changes depending on a position of an ear of a wearer, a type of glasses or the like. Hence, the operator can measure the optical properties of the lens at the pantoscopic angle which is obtained in the wearing state in which the wearer is wearing the glasses.

For example, the pantoscopic angle adjusting portion may move the position of the temple in the up-down direction with respect to the bridge of the glasses as a rotation center. For example, in the wearing state of the glasses, the bridge abutting the nose of the wearer is the rotation center, and thus the position of the temple changes in the up-down direction depending on a height of the ears of the wearer. Therefore, the operator can adjust the pantoscopic angle with respect to the bridge of the glasses as the rotation center and can easily adjust the pantoscopic angle of the glasses to the pantoscopic angle which is obtained in the wearing state.

In addition, the pantoscopic angle adjusting portion may include the pantoscopic angle acquiring portion, for example. For example, the pantoscopic angle acquiring portion acquires pantoscopic angle information of the glasses when the wearer is wearing the glasses. For example, the pantoscopic angle information may be a pantoscopic angle of the glasses which has been measured in advance by using a glasses-worn image analyzing apparatus or the like. For example, the pantoscopic angle acquiring portion may be configured to include a receiving unit for receiving the pantoscopic angle of the glasses and to receive the pantoscopic angle information transmitted from the glasses-worn image analyzing apparatus or the like. In addition, the pantoscopic angle acquiring portion may be configured to acquire the pantoscopic angle information from the pantoscopic angle of the glasses which is input by the operator.

For example, the pantoscopic angle adjusting portion changes the pantoscopic angle based on the pantoscopic angle information acquired by the pantoscopic angle acquiring portion. Consequently, the operator can easily adjust the pantoscopic angle of the glasses to the pantoscopic angle which is obtained in the wearing state without a complex operation.

<Temple Adjusting Portion>

For example, the adjusting portion includes a temple adjusting portion (for example, a temple adjusting unit 100) for performing abutting at least one of the right and left temples (for example, the left temple FTL and the right temple FTR) of the glasses, moving the position of at least one temple of the right and left temples, and changing a width between the right and left temples. For example, the temple adjusting portion may abut at least one of the right and left temple tips (for example, the left temple tip FML and the right temple tip FMR) of the glasses and move the position of at least one temple tip of the right and left temple tips, thereby changing the width between the right and left temple tips.

For example, the temple adjusting portion may be configured to be capable of adjusting the width between the right and left temples to a constant width. In this case, the constant width may be an average head width of adults or an average head width of children. It is needless to say that the width between the right and left temples may be fixed to the constant width in advance in a configuration. In addition, the temple adjusting portion may be configured to be capable of changing the width between the right and left temples, for example. In this case, it is possible to adjust the width between the right and left temples depending on a head width for each wearer. For example, examples of a configuration in which the width between the right and left temples changes includes a configuration in which the width is widened, a configuration in which the width is narrowed, or the like. For example, such a configuration makes it possible to reproduce a shape of the glasses which is deformed with a widened width between the temples when the wearer is wearing the glasses. Hence, the operator can measure the optical properties of the lens with the width between the temples, which is obtained in the wearing state in which the wearer is wearing the glasses.

In addition, the temple adjusting portion may include the head width acquiring portion, for example. For example, the head width acquiring portion acquires head width information of the wearer who wears the glasses. For example, the head width information may be a head width of the wearer, which has been measured in advance by using a head width measuring instrument or the like. For example, the head width acquiring portion may be configured to include a receiving unit for receiving the head width of the wearer and to receive the head width information transmitted from the head width measuring instrument or the like. In addition, the head width acquiring portion may be configured to acquire the head width information from the head width of the wearer which is input by the operator, for example.

For example, the temple adjusting portion moves at least one temple of the right and left temples in the left-right direction based on the head width information acquired by the head width acquiring portion. Consequently, the operator can easily adjust a width between temples to a head width of a wearer.

<Example>

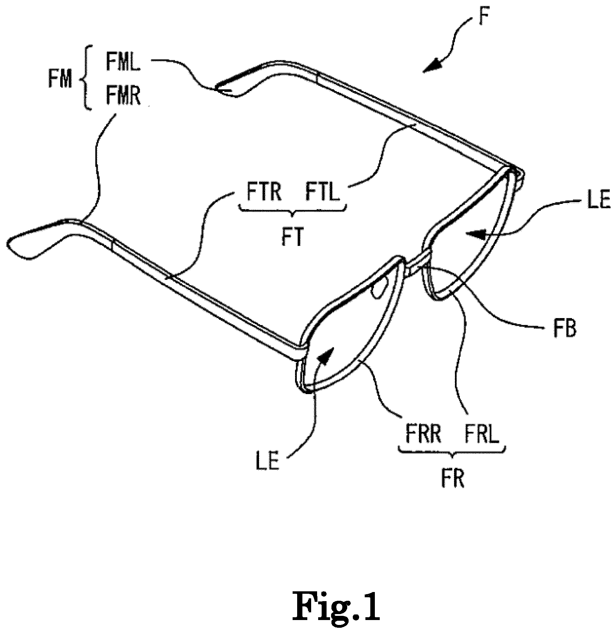

Hereinafter, the glasses measurement apparatus in the example will be described. Fig. 1 is a view showing the glasses F (or a glasses frame F). For example, the glasses F has the bridge FB, the rims FR (a left rim FRL and a right rim FRR), the temples FT (the left temple FTL and the right temple FTR), the temple tips FM (a left temple tip FML and a right temple tip FMR), or the like, and lenses LE are each framed in the right and left rims. In the example, a front side, a rear side, an upper side, and a lower side of the glasses F are described as sides in directions defined on the basis of the state in which a wearer is wearing the glasses F. That is, the front side of the glasses F is a side on which the rim FR is positioned, and the rear side of the glasses F is a side on which the temple tip FM is positioned. In addition, an upper side of the glasses F is a side of an upper end of the rim FR, and a lower side of the glasses F is a side of a lower end of the rim FR.

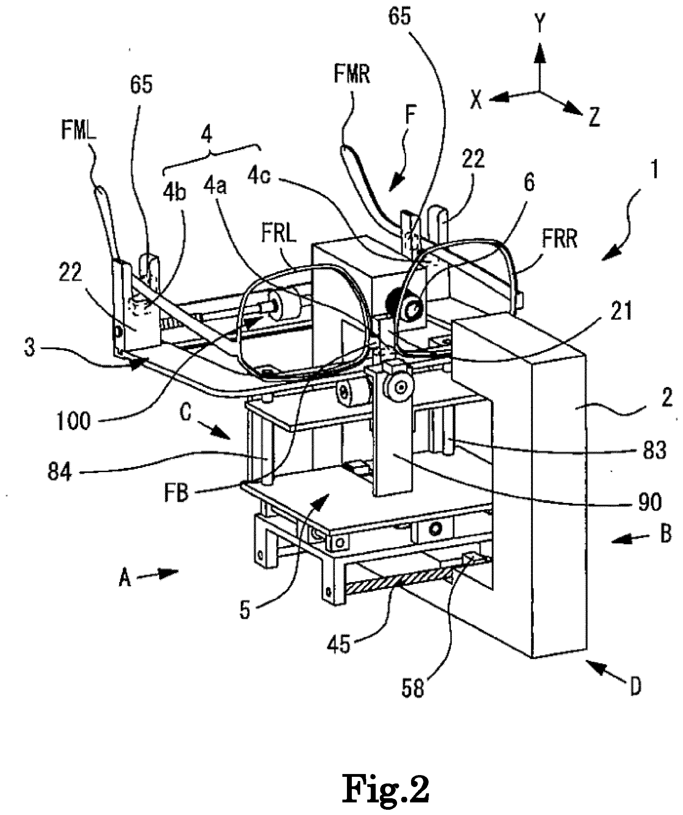

Fig. 2 is a view showing a schematic configuration of the glasses measurement apparatus 1. For example, the glasses measurement apparatus 1 includes a measurement part 2, the glasses supporting unit 3, the measuring unit 4, and the drive unit 5. For example, the measurement part 2 has a nosepiece 6 which is a base point when the optical properties (for example, the spherical power S, the cylindrical power C, the astigmatism axis angle A, the prism amount $\Delta$, or the like) of the lens LE framed in the glasses F are measured. In addition, the measurement part 2 includes the measurement optical system 10 to be described below, for example.

For example, the glasses supporting unit 3 supports the glasses F. In the example, the glasses supporting unit 3 supports the glasses F in a state in which the lower side (that is, the side of the lower end of the rim FR) of the glasses F points upward. It is needless to say that the glasses supporting unit 3 may support the glasses F in a state in which the upper side (that is, the side of the upper end of the rim FR) of the glasses F points upward. For example, the measuring unit 4 measures a weight of the glasses F at two or more positions of the glasses F. For example, the drive unit 5 moves the glasses supporting unit 3 with respect to the measurement part 2 in the front-rear direction (Z direction), the left-right direction (X direction), and the up-down direction (Y direction). In addition, the drive unit 5 causes the glasses supporting unit 3 to tilt with respect to the measurement part 2 in an oblique direction (YZ direction), for example.

<Measurement Optical System>

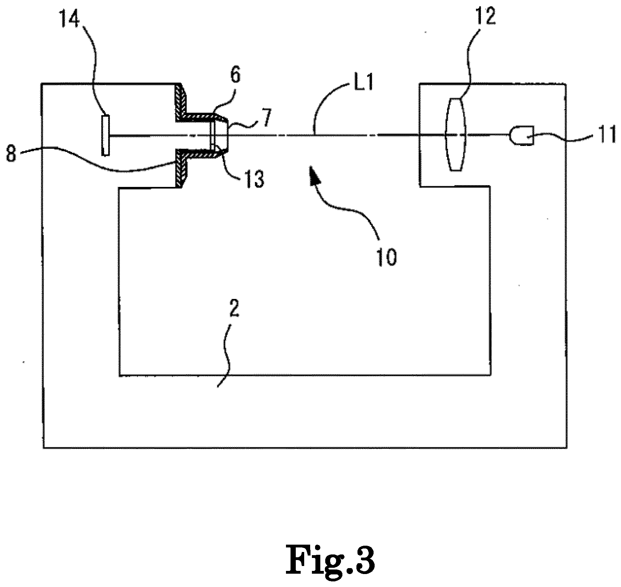

Fig. 3 is a view showing an optical system in the glasses measurement apparatus 1. For example, an optical axis L1 of the measurement optical system 10 is disposed to be perpendicular to a plane of an opening portion 7 (a circular shape having a diameter of 8 mm) of the nosepiece 6. For example, the measurement optical system 10 includes the light source 11, a collimator lens 12, the index plate 13, the light receiving element 14, or the like. For example, the light source 11 may be configured of a light emitting diode (LED). For example, the collimator lens 12 causes measurement light radiating from the light source 11 to be parallel (also including substantially parallel) to the optical axis L1. For example, the index plate 13 is held by a holding member 8 in the measurement part 2. For example, the index plate 13 is provided with a measurement index for measuring the optical properties of the lens LE. A configuration of the measurement index and measurement of the optical properties of the lens LE by using the measurement index are obtained as described in JP-A-2008-241694. For example, the light receiving element 14 may be configured of a charge coupled device (CCD) or a complementary metal oxide semiconductor (CMOS). For example, the measurement light emitted from the light source 11 is diffused in every direction; however, the measurement light is refracted via the collimator lens 12 so as to be parallel to the optical axis L1 and reaches the light receiving element 14 through the opening portion 7 of the nosepiece 6 and the index plate 13.

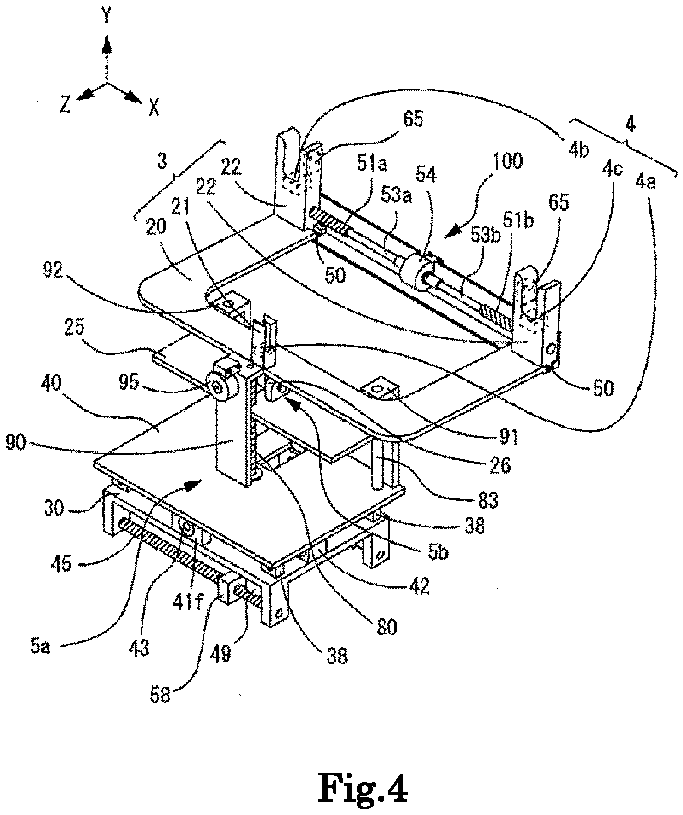

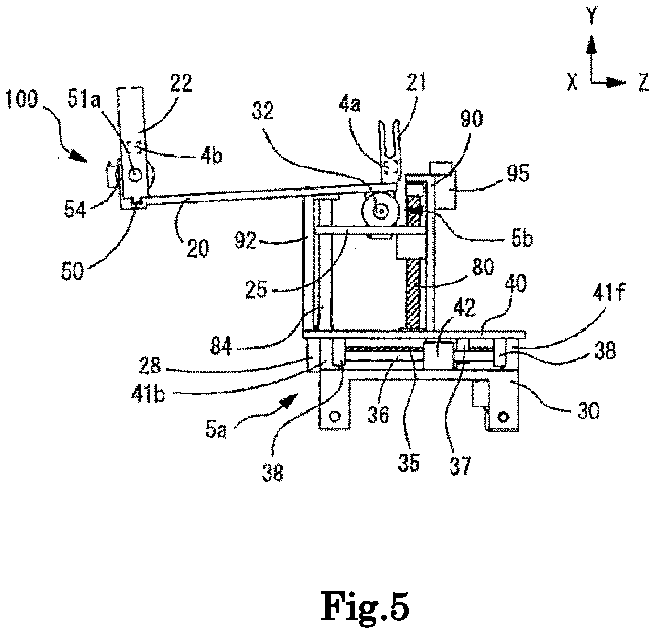

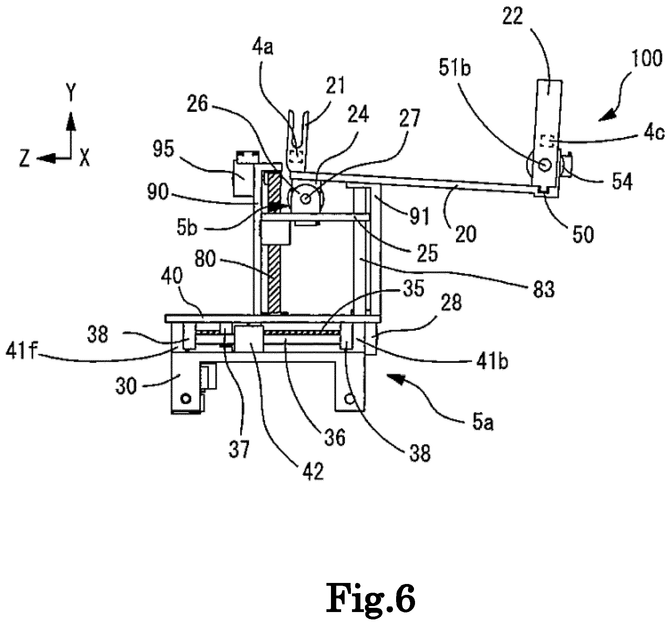

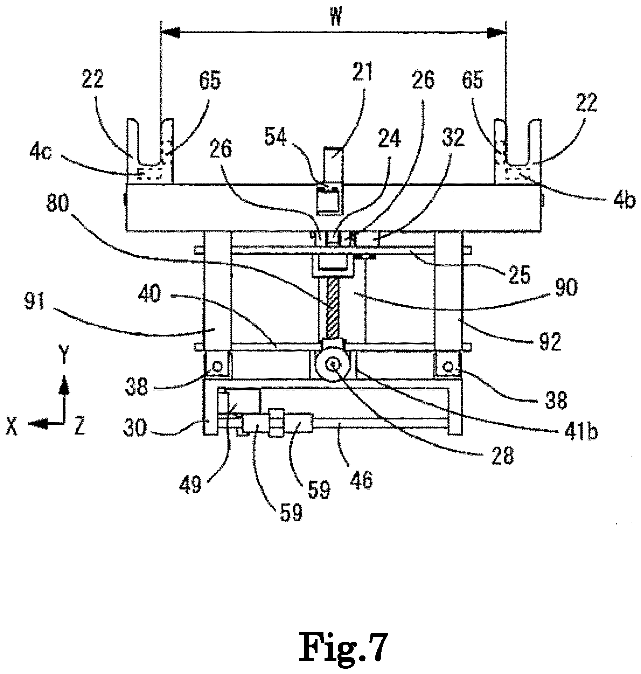

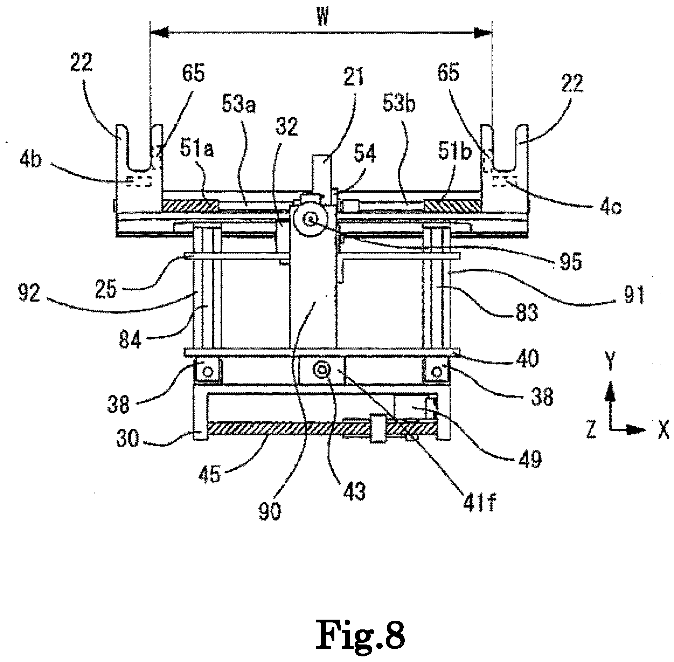

Figs. 4 to 8 are views of a schematic configuration for illustrating the glasses supporting unit 3, the measuring unit 4, and the drive unit 5. Fig. 4 is a perspective view of the glasses measurement apparatus 1. Fig. 5 is a right-side view (view in an arrow A direction in Fig. 2) of the glasses measurement apparatus 1. Fig. 6 is a left-side view (view in an arrow B direction in Fig. 2) of the glasses measurement apparatus 1. Fig. 7 is a front view (view in an arrow C direction in Fig. 2) of the glasses measurement apparatus 1. Fig. 8 is a rear view (view in an arrow D direction in Fig. 2) of the glasses measurement apparatus 1. The measurement part 2 is omitted in Figs. 4 to 8, for convenience. Hereinafter, the glasses supporting unit 3, the measuring unit 4, and the drive unit 5 are described in this order.

<Glasses Supporting Unit>

For example, the glasses supporting unit 3 supports the glasses F at two or more positions. For example, the glasses supporting unit 3 includes a base 20, a front support 21, and a rear support 22. For example, the front support 21 is fixed to the base 20. For example, the rear support 22 is provided to the base 20 via the temple adjusting unit 100 to be described below. The rear support 22 may be directly fixed to the base 20 without the temple adjusting unit 100 interposed therebetween. For example, a plate 24 is attached on an undersurface of the base 20, and thus a forward tilt or rearward tilt is performed around an attachment shaft 27 in the oblique direction (YZ direction).

For example, the front support 21 supports the position of the front region of the glasses F. For example, the position of the front region of the glasses F is a position on the front side from a center position of the bridge FB or the rim FR of the glasses F which is obtained in the state in which a wearer is wearing the glasses F. For example, in the example, a case where the front support 21 supports the bridge FB of the glasses F is described as an example. For example, the front support 21 has a U shape that is open upward, and the bridge FB is placed thereon in a state in which the upper side (that is, the side of the upper end of the rim FR) of the glasses F points downward. It is needless to say that the bridge FB may be placed on the front support 21 in a state in which the lower side (that is, the side of the lower end of the rim FR) of the glasses F points downward.

For example, the rear support 22 supports the position of the rear region of the glasses F. For example, the position of the rear region of the glasses F is a position on the rear side from the center position of the temple FT or the temple tip FM of the glasses F which is obtained in the state in which a wearer is wearing the glasses F. For example, in the example, a case where the rear support 22 supports the temple tip FM of the glasses F is described as an example. For example, the rear support 22 has a U shape that is open upward, and the temple tip FM is placed thereon in a state in which the upper side (that is, the side of the upper end of the rim FR) of the glasses F points downward. It is needless to say that the temple tip FM may be placed on the rear support 22 in a state in which the lower side (that is, the side of the lower end of the rim FR) of the glasses F points downward.

<Measuring Unit>

For example, the measuring unit 4 measures a weight of the glasses F at two or more positions including the position of the front region of the glasses F and the position of the rear region of the glasses F. For example, the measuring unit 4 in the example measures a weight at the position of the bridge FB of the glasses F as the position of the front region of the glasses F and measures a weight at the position of the temple tip FM of the glasses F as the position of the rear region of the glasses F. The position of the bridge FB may be any position of the bridge FB such as the center of the bridge FB or an end of the bridge FB. In addition, the position of the temple tip FM may be any position of the temple tip FM such as the center of the temple tip FM or an end of the temple tip FM.

For example, the measuring unit 4 measures each weight at least at the left temple tip FML and at the right temple tip FMR of the glasses F as the above-mentioned positions of the temple tip FM of the glasses F. That is, the measuring unit 4 in the example measures the weight of the glasses F at three positions of the bridge FB, the left temple tip FML, and the right temple tip FMR on the glasses F. For example, the weight at the left temple tip FML may be measured at any position of the left temple tip FML such as the center of the left temple tip FML or an end of the left temple tip FML. Similarly, the weight at the right temple tip FMR may be measured at any position of the right temple tip FMR such as the center of the right temple tip FMR or an end of the right temple tip FMR, for example. The positions of the temple tip FM of the glasses F, at which the weight is measured, may be positions which are different on the left temple tip FML and the right temple tip FMR from each other; however, it is preferable that the left temple tip FML and the right temple tip FMR are positioned at bilaterally symmetrical positions to each other.

For example, the measuring unit 4 in the example is configured of the measurement sensor 4a, the measurement sensor 4b, and the measurement sensor 4c which are capable of measuring a weight. For example, the measurement sensor 4a is disposed at the same position as the front support 21 in the glasses supporting unit 3. Consequently, the measurement sensor 4a is capable of measuring the weight at the position of the bridge FB of the glasses F. In addition, the measurement sensor 4b and the measurement sensor 4c are disposed at the same position as the rear support 22 in the glasses supporting unit 3, for example. Consequently, the measurement sensor 4b and the measurement sensor 4c are capable of measuring the weights at the positions of the temple tips FM of the glasses F. In the example, the measurement sensor 4b measures the weight at the position of the left temple tip FML of the glasses F, and the measurement sensor 4c measures the weight at the position of the right temple tip FMR of the glasses F. That is, the measurement sensors are disposed at the same positions as the glasses supporting unit 3 and are capable of measuring the weight of the glasses F at the positions at which the glasses supporting unit 3 supports the glasses F, for example.

For example, it is possible to use a pressure sensor as the measurement sensors (for example, the measurement sensor 4a, the measurement sensor 4b, and the measurement sensor 4c), which are capable of measuring the weights. For example, when the pressure sensor detects a pressure from the outside, the pressure sensor converts an electric resistance value changed due to the pressure into a voltage value. For example, the weight of the glasses F is obtained from the voltage value detected by the pressure sensor. In this case, a computing equation, a conversion table (table) or the like for converting the voltage value into the weight may be stored in a memory 75 to be described below. For example, the computing equation or the conversion table may be set from an experiment, a simulation or the like performed in advance. In the above description, the pressure sensor is described as an example of the measurement sensor that is capable of measuring the weight; however, a configuration may be employed, in which the weight of the glasses F is directly acquired by using a weight sensor or the like.

<Drive Unit>

For example, the drive unit 5 includes an XYZ moving mechanism 5a, which moves the glasses supporting unit 3 with respect to the measurement part 2 in the front-rear direction (Z direction), the left-right direction (X direction), and the up-down direction (Y direction), and a pantoscopic angle adjusting mechanism 5b that causes the glasses supporting unit 3 to tilt in the oblique direction (YZ direction). Hereinafter, the XYZ moving mechanism 5a and the pantoscopic angle adjusting mechanism 5b will be described in this order.

<XYZ Moving Mechanism>

For example, a nut 58 is fixed to a lower portion of the measurement part 2, and a feed screw 45 extending in the X direction is screwed into the nut 58. For example, both ends of the feed screw 45 are connected to a base 30 via a bearing. In addition, a ball bushing 59 is fixed to the lower portion of the measurement part 2, and a shaft 46 extending in the X direction penetrates the ball bushing, for example. For example, both ends of the shaft 46 are connected to the base 30. For example, a motor 49 is attached to the undersurface of the base 30. For example, a drive shaft of the motor 49 is screwed with the feed screw 45.

For example, when the motor 49 is driven, the feed screw 45 rotates. For example, the measurement part 2 is fixedly disposed. Therefore, when the feed screw 45 is fed by the nut 58, the base 30 moves along with the feed screw 45 in the left-right direction (X direction). For example, at this time, the shaft 46 slides in the ball bushing 59. For example, the glasses supporting unit 3 moves the base 30 and, thus, can move the base with respect to the measurement part 2 in the left-right direction.

For example, a bearing supporting member is fixed to a top surface of the base 30. For example, the bearing supporting member is configured of a bearing supporting member 41f, which is positioned on a front side of the top surface of the base 30, and a bearing supporting member 41b, which is positioned on a rear side of the top surface of the base 30. For example, the bearing supporting member 41f is provided with a bearing 43, and one end of a feed screw 35 extending in the Z direction is connected to the bearing 43. For example, the bearing supporting member 41b is also provided with a bearing, and the feed screw 35 penetrates the bearing. For example, the other end of the feed screw 35 is connected to the drive shaft of a motor 28. For example, the motor 28 is fixed to the bearing supporting member 41b.

In addition, a ball-bushing supporting member 42 is fixed to the top surface of the base 30, for example. For example, the ball bushing is fixed to the ball-bushing supporting member 42, and a shaft 36 extending in the Z direction penetrates the ball bushing, for example.

For example, a nut supporting member 37 and a shaft supporting member 38 are fixed to an undersurface of a base 40. For example, the nut supporting member 37 is provided with a nut, and the nut is screwed with the feed screw 35. For example, the shaft supporting member 38 is provided with a ball bushing, and the shaft 36 penetrates the ball bushing.

For example, when the motor 28 is driven, the feed screw 35 rotates. Consequently, the nut of the nut supporting member 37 is fed by the feed screw 35, and the nut supporting member 37 and the base 40, to which the nut supporting member 37 is fixed, move in the front-rear direction (Z direction). For example, at this time, along with movement of the base 40, the shaft supporting member 38 fixed to the base 40 slides on the shaft 36. For example, even when the feed screw 35 is rotated by the motor 28, the bearing 43 prevents drive of the motor 28 from being transmitted to the base 30, and thus the base 30 is not moved in the front-rear direction (Z direction). For example, the glasses supporting unit 3 moves the base 40 and, thus, can move the base with respect to the measurement part 2 in the front-rear direction.

For example, a base 25 has a nut, and a feed screw 80 extending in the Y direction is screwed into the nut. In addition, the base 25 has a ball bushing, and a shaft 83 and a shaft 84, which extend in the Y direction, each penetrate the ball bushing, for example. For example, one end of the feed screw 80 is connected to the base 40 via a bearing provided in the base 40. For example, the other end of the feed screw 80 is connected to an attachment plate 90 via a bearing provided in the attachment plate 90. For example, one end of the shaft 83 is connected to the base 40 via a ball bushing provided in the base 40. For example, the other end of the shaft 83 is connected to an attachment plate 91 via a ball bushing provided in the attachment plate 91. Similarly, one end of the shaft 84 is connected to the base 40 via the ball bushing provided in the base 40, for example. For example, the other end of the shaft 84 is connected to an attachment plate 92 via a ball bushing provided in the attachment plate 92. For example, a motor 95 is fixed to the attachment plate 90. For example, a drive shaft of the motor 95 is screwed with the feed screw 80.

For example, when the motor 95 is driven, the feed screw 80 rotates. Consequently, since the nut of the base 25 is fed by the feed screw 80, the base 25 moves in the up-down direction (Y direction). For example, at this time, along with movement of the base 25, the ball bushing of the base 25 slides on both of the shaft 83 and the shaft 84. For example, even when the feed screw 80 is rotated by the motor 95, the bearing prevents drive of the motor 95 from being transmitted to the base 40, and thus the base 40 and the base 30 are not moved in the up-down direction (Y direction). For example, the glasses supporting unit 3 moves the base 25 and, thus, can move the base with respect to the measurement part 2 in the up-down direction.

<Pantoscopic Angle Adjusting Mechanism>

For example, the pantoscopic angle adjusting mechanism 5b moves, in the up-down direction, at least one position of the position of the front region of the glasses F and the position of the rear region of the glasses F and change the tilt angle of the glasses F. For example, the pantoscopic angle adjusting mechanism 5b in the example moves, in the up-down direction, at least one position of the position of the bridge FB of the glasses F as the position of the front region of the glasses F and the position of the temple FT of the glasses F as the position of the rear region of the glasses F and changes the tilt angle of the glasses F. The position of the temple FT of the glasses F includes a position of the temple FT including the temple tip FM.

For example, in a configuration in which the pantoscopic angle adjusting mechanism 5b changes the tilt angle of the glasses F, the position of the temple FT may be moved in the up-down direction with respect to the bridge FB of the glasses F as a rotation center. Alternatively, at least one position of the bridge FB or the temple FT of the glasses F may be moved in the up-down direction. In the example, a configuration in which the tilt angle of the glasses F is changed by using the pantoscopic angle adjusting mechanism 5b with respect to the bridge FB of the glasses F as the rotation center is described as an example.

For example, the pantoscopic angle adjusting mechanism 5b includes the plate 24, a plate 26, the attachment shaft 27, a motor 32, or the like. For example, the plate 24 is attached to the undersurface of the base 20, and the plate 26 is attached to a top surface of the base 25. For example, the attachment shaft 27 penetrates bearings provided in the plate 24 and the plate 26. For example, the motor 32 is attached to one end of the attachment shaft 27. For example, the motor 32 is fixed on the base 25. For example, the attachment shaft 27 and the plate 24 are fixed by beads (not shown). Therefore, when the motor 32 is driven, the attachment shaft 27 rotates, and the plate 24 tilts around the attachment shaft 27, for example. For example, the base 20 constituting the supporting unit 3 can tilt in the oblique direction (YZ direction) as described above. In the example, the plate 24 attached to the base 20 and the plate 26 attached to the base 25 are positioned right below the front support 21. Therefore, in the state in which the glasses F is placed on the glasses supporting unit 3, the base 20 can be considered to tilt in the oblique direction with respect to the bridge FB of the glasses F as the rotation center.

For example, when a drive direction of the motor 32 is switched, a tilt direction of the base 20 changes. For example, in a case where the motor 32 rotates clockwise, the base 20 tilts in an upward direction (in other words, a direction in which the front support 21 is more lifted than the rear support 22) around the attachment shaft 27. For example, in a case where the motor 32 rotates counterclockwise, the base 20 tilts in a downward direction (in other words, a direction in which the front support 21 is more lowered than the rear support 22) around the attachment shaft 27. The tilt direction of the base 20 with respect to the drive direction of the motor 32 may be different from that in a configuration in the example. For example, the base 20 tilts, and thereby it is possible to change a tilt angle of the glasses F in association with the tilt of the base 20 in a state in which the glasses supporting unit 3 supports the glasses F.

For example, the glasses measurement apparatus 1 in the example may have a configuration for acquiring the pantoscopic angle information when a wearer is wearing the glasses F. For example, in this case, a configuration may be employed, in which an operator inputs the pantoscopic angle of the glasses F, which has been measured in advance by using another apparatus (for example, the glasses-worn image analyzing apparatus or the like disclosed in JP-A-2015-179254), from an operation button 71 provided in the glasses measurement apparatus 1. In addition, in this case, the glasses measurement apparatus 1 may be configured to receive the pantoscopic angle of the glasses F which has been acquired by the other apparatus. For example, the pantoscopic angle adjusting mechanism 5b changes the pantoscopic angle of the glasses F based on the pantoscopic angle information acquired as described above. More specifically, a control unit 60 to be described below controls a drive amount of the motor 32 based on the pantoscopic angle information. In this manner, an angle, by which the base 20 tilts, changes, and the pantoscopic angle of the glasses F is automatically adjusted.

<Temple Adjusting Unit>

For example, the glasses measurement apparatus 1 in the example may include the temple adjusting unit 100 for changing a width between the temples FT of the glasses F. For example, the temple adjusting unit 100 abuts at least one of the left temple FTL and the right temple FTR of the glasses F and moves a position of at least one temple of the right and left temples, thereby changing a width W between the right and left temples. For example, in the example, a configuration, in which the temple adjusting unit 100 abuts both of the left temple FTL and the right temple FTR and moves positions of both of the right and left temples, thereby changing the width between the right and left temples, is described as example.

For example, the temple adjusting unit 100 includes an abutting portion, a guide portion 50, a feed screw 51a, a feed screw 51b, a feed screw shaft 53a, a feed screw shaft 53b, a double-shaft motor 54, or the like. For example, the abutting portion abuts at least a part of the position of the rear region in the glasses F. In the example, the rear support 22 constituting the glasses supporting unit 3 also serves as an abutting portion in the temple adjusting unit 100. For example, the guide portion 50 is provided in the base 20 and holds the rear support 22 slidably. For example, each one end of each of the feed screw 51a and the feed screw 51b is screwed with the rear support 22 via the nut provided in the rear support 22. For example, the feed screw shaft 53a is fixed to the other end of the feed screw 51a. For example, the feed screw shaft 53b is fixed to the other end of the feed screw 51b. For example, the feed screw 51a is processed into a right screw, and the feed screw 51b is processed into a left screw. For example, the feed screw shaft 53a and the feed screw shaft 53b are connected to the double-shaft motor 54.

For example, the drive of the double-shaft motor 54 causes the feed screw shaft 53a and the feed screw shaft 53b to rotate and the feed screw 51a and the feed screw 51b also to rotate. Therefore, for example, the nuts of the rear support 22 are fed by the feed screws, and the rear support 22 slides in the left-right direction (X direction) along the guide portion 50. Since the feed screw 51a and the feed screw 51b have different rotation directions of the screw from each other, a direction of the rotation of the double-shaft motor 54 is switched, and thereby the rear supports 22 move in a direction in which the rear supports approach each other or move in a direction in which the rear supports are separated from each other. For example, in the example, when the double-shaft motor 54 rotates clockwise, the rear supports 22 are separated from each other. In addition, when the double-shaft motor 54 rotates counterclockwise, the rear supports 22 approach each other, for example. It is needless to say that a moving direction of the rear support 22 with respect to the rotation direction of the double-shaft motor 54 may be different from that in the example. Consequently, the width W between the rear supports 22 constituting the glasses supporting unit 3 changes (refer to Figs. 7 and 8). That is, in the state in which the glasses supporting unit 3 supports the glasses F, it is possible to change the width between the temples FT of the glasses F in association with the change of the width W between the rear supports 22. For example, the shape of the glasses is deformed when a wearer wears the glasses; however, the width between the right and left temples change, and thereby it is possible to reproduce a deforming state of a change in the width.

For example, the glasses measurement apparatus 1 in the example may have a configuration for acquiring head width information of the wearer who wears the glasses F. For example, in this case, a configuration may be employed, in which the operator inputs a head width of the wearer, which has been measured in advance by using another apparatus (for example, a head width measuring instrument or the like), from the operation button 71 provided in the glasses measurement apparatus 1. In addition, in this case, the glasses measurement apparatus 1 may be configured to receive the head width of the wearer, which has been acquired by the other apparatus, for example. For example, the temple adjusting unit 100 moves, in the left-right direction, at least one abutting portion of the right and left abutting portions (the rear support 22 in the example) based on the head width information acquired as described above. More specifically, the control unit 60 to be described below controls a drive amount of the double-shaft motor 54 based on the head width information. In this manner, the rear supports 22 move in the left-right direction, and the width W between the rear supports 22 is automatically adjusted.

For example, in a case where a configuration in which the glasses measurement apparatus 1 acquires the head width information of the wearer is employed, a sensor 65 for detecting a grip force of the glasses F for gripping the head of the wearer by the glasses F may be provided to the rear support 22. For example, it is possible to use a pressure sensor as the sensor. For example, in this case, the control unit 60 to be described below obtains a grip force for gripping the head of the wearer with the glasses F, from the voltage value measured by the pressure sensor. For example, in this case, the computing equation, the conversion table (table) or the like for converting the voltage value into the grip force may be stored in the memory 75 to be described below by the experiments, the simulations or the like which is conducted in advance. For example, when the glasses F suitable for the wearer is described, the wearer can refer to the grip force that is applied to the head, which is obtained in a state in which the wearer is wearing the glasses F.

<Control Unit>

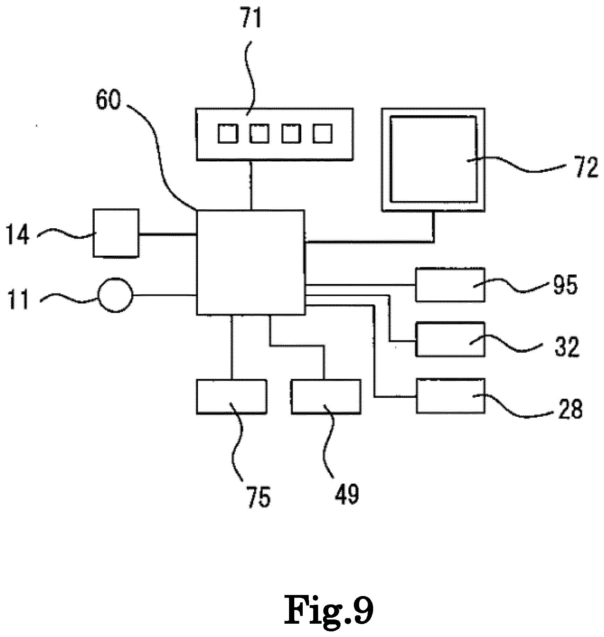

Fig. 9 is a diagram showing a control system in the glasses measurement apparatus 1. For example, the operation button 71, the display 72, the light source 11, the light receiving element 14, a motor (for example, the double-shaft motor 54, the motor 49, the motor 28, the motor 32, the motor 95 or the like) constituting the drive unit 5 are connected to the control unit 60. In addition, a glasses frame shape measuring unit 7, a motor, a drive mechanism (not shown) or the like constituting a cup attaching mechanism 8 is connected to the control unit 60.

For example, the control unit 60 includes a CPU (processor), a RAM, a ROM, and the like. For example, the CPU controls drive of every member in the glasses measurement apparatus 1. In addition, the CPU performs various types of arithmetic processing (for example, a barycentric position of the glasses F, the grip force of the glasses F). For example, the RAM temporarily stores various types of information. For example, the ROM stores a program or the like which is executed by the CPU. The control unit 60 may be configured to have a plurality of control units (that is, a plurality of processors).

For example, the memory 75 is a non-transitory storage medium that is capable of storing the storage content even when electric power supply is cut off. For example, a hard disk drive, a flash ROM, a USB memory that is removably installed in the glasses measurement apparatus 1 or the like can be used as the memory 75. For example, the computing equation, the conversion table, or the like for converting the voltage value into a weight is stored in the memory 75.

<Control Operation>

A control operation of the glasses measurement apparatus 1 having the above-described configuration is described. For example, the glasses measurement apparatus 1 has a gravity-center acquiring mode for acquiring the barycentric position of the glasses F and a lens measuring mode for measuring the optical properties of the lens of the glasses F having the wearing state reproduced. The gravity-center acquiring mode and the lens measuring mode may be configured to be automatically switched to be continually set or may be configured to be manually set separately.

Incidentally, the lens is fitted into the frame of the glasses, and thereby a weight on the front side of the glasses is heavier than a weight on the rear side, and the barycentric position tends to be biased. For example, when the glasses having the barycentric position biased to the front side are worn, a wearer has a bad wearing feeling due to a problem such as a pain in the nose due to the application of a load to the nose and sliding down of the glasses. Therefore, a technique of adjusting the barycentric position such as adding a weight that is attachable to and detachable from the temple tip portion of the glasses is employed (JP-A-2007-264207).

The technique of adjusting the barycentric position is performed after preparing the glasses, and it is not possible to select, in advance, and prescribe glasses having a low load by the wearer. In addition, the technique of adjusting the barycentric position is a technique in which the barycentric position is adjusted based on experience of the wearer, and thereby variations in adjustment degree are likely to occur.

Therefore, in the gravity-center acquiring mode that is described below, the barycentric position of the glasses is detected, and thereby an object is to prescribe the glasses appropriate to the wearer.

<Gravity-Center Acquiring Mode>

Hereinafter, the gravity-center acquiring mode will be described in detail. First, the operator places the glasses F on the front support 21 and the rear support 22 of the glasses supporting unit 3. For example, the measurement sensor 4a provided on the front support 21 detects a change in pressure that is applied to the glasses supporting unit 3, thereby, measuring the weight at the bridge FB of the glasses F. In addition, the measurement sensor 4b and the measurement sensor 4c provided on the rear support 22 detects a change in pressure that is applied to the glasses supporting unit 3, thereby, measuring the weight at both of the left temple tip FML and the right temple tip FMR of the glasses F. For example, the weight at each region of glasses F is stored in the memory 75 of the control unit 60.

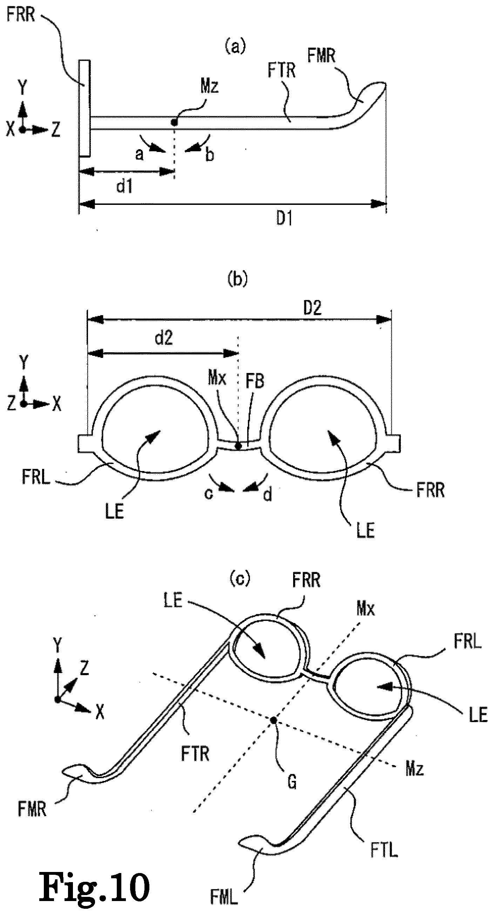

For example, the control unit 60 acquires a barycentric position G of the glasses F based on the weight at each of the bridge FB, the left temple tip FML, and the right temple tip FMR of the glasses F. Fig. 10 is a diagram illustrating a barycentric position G of the glasses F. (a) in Fig. 10 is a side view of the glasses F. (b) in Fig. 10 is a front view of the glasses F. (c) in Fig. 10 is a perspective view of the glasses F. For example, when the barycentric position of the glasses F is acquired, it is necessary to have both of a distance D1 from a front surface of the rim FR to a front end of the temple tip FM and a distance D2 from a left end of the left rim FRL to a right end of the right rim FRR. Therefore, the operator may input the distance D1 and distance D2 by using the operation button 71 displayed on the display 72. For example, the distance D1 and the distance D2 may be determined based on a number representing a size of the glasses written on an inner side of the temples of the glasses F or may be measured by using a ruler or the like.

For example, the barycentric position G of the glasses F can be obtained from a balance position of a position at which balance is achieved in the depth direction (Z direction in Fig. 10) of the glasses F and a position at which balance is achieved in the left-right direction (X direction in Fig. 10) of the glasses F with respect to two directions. For example, a balance position Mz in the depth direction of the glasses F can be calculated by the following equation.

$$d1 \times F1 = (D1 - d1) \times (F2 + F3)$$

In the above equation, F1 represents a weight at the bridge FB of the glasses F. F2 represents a weight at the left temple tip FML of the glasses F. F3 represents a weight at the right temple tip FMR of the glasses F. d1 represents a distance from the right rim FRR of the glasses F to the balance position Mz. The distance d1 may represent a distance from the left rim FRL of the glasses F to the balance position Mz.

For example, the control unit 60 computes the above-described equation, thereby making it possible to detect the balance position in the depth direction. That is, a position, at which a force to rotate the glasses F in a direction of the rim FR (an arrow a direction in (a) of Fig. 10) is equal to a force to rotate the glasses F in a direction of the temple tip FM (an arrow b direction in (a) of Fig. 10), with respect to the depth direction of the glasses F, is detected as the balance position Mz in the depth direction. For example, consequently, the control unit 60 is capable of obtaining a position in the Z direction at the barycentric position G of the glasses F. That is, a Z coordinate of the barycentric position G of the glasses F is Mz.

In addition, a balance position Mx in the left-right direction of the glasses F can be calculated by the following equation, for example.

$$d2 \times F2 = (D2 - d2) \times F3$$

In the above-described equation, d2 represents a distance from the left end of the left rim FRL to the balance position Mx of the glasses F.

For example, the control unit 60 computes the above-described equation, thereby making it possible to detect the balance position in the left-right direction. That is, a position, at which a force to rotate the glasses F in a direction of the left rim FRL (an arrow c direction in (b) of Fig. 10) is equal to a force to rotate the glasses F in a direction of the right rim FRR (an arrow d direction in (b) of Fig. 10), with respect to the left-right direction of the glasses F, is detected as the balance position Mx in the left-right direction. For example, consequently, the control unit 60 is capable of obtaining a positional coordinate in the X direction at the barycentric position G of the glasses F. That is, an X coordinate of the barycentric position G of the glasses F is Mx.

For example, the control unit 60 obtains the barycentric position G of the glasses F from the balance position Mx and the balance position Mz acquired as described above. For example, the positional coordinate of the barycentric position G in the X direction is the position of the balance position Mx, and the positional coordinate of the barycentric position G in the Z direction is the position of the balance position Mz. Therefore, the positional coordinate of the barycentric position G of the glasses F can be represented by (Mx, Mz). That is, in (c) of Fig. 10, a point at which the balance position Mz of the glasses F with respect to the depth direction is coincident with the balance position Mx in the left-right direction is detected as the barycentric position G of the glasses F.

For example, the control unit 60 may display the barycentric position G of the glasses F on the display 72 after acquiring the barycentric position G of the glasses F. In this case, numerical values of the distance d1 and the distance d2 obtained by the above-mentioned equation may be displayed. In addition, the control unit 60 may display the balance information of the glasses F on the display 72 by obtaining the barycentric position G of the glasses F, for example. For example, information for indicating the position of balance of the glasses F may be displayed as the balance information.

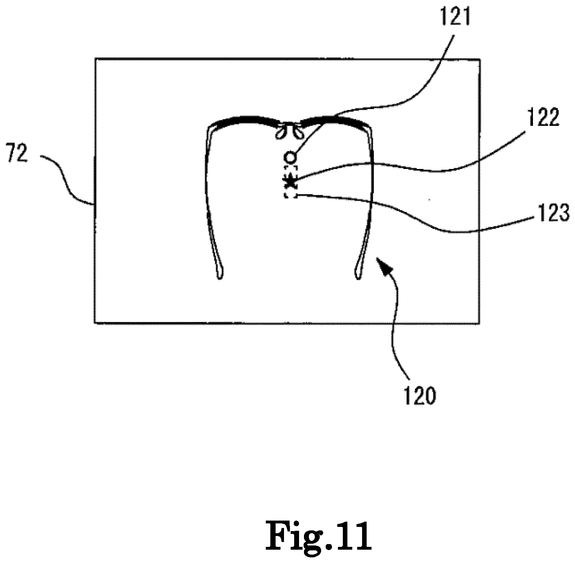

Fig. 11 is a view showing an example of balance information. Examples of the balance information include illustration 120 in which the glasses F is schematically shown, a mark 121 that represents the balance position of the glasses F, a mark 122 that represents a mean balance position of the glasses, or the like. It is needless to say that the barycentric position G or the like of the glasses F may be displayed as the balance information on the display 72. For example, the mean balance position of the glasses may be set for each type of the glasses F (for example, a metal frame, a cell frame, or the like) from the experiments, the simulations, in advance. For example, the mark 122 is displayed at a mean position according to the types of selected glasses. The mark 122 in the example represents a mean balance position of the glasses; however, the mark is not limited thereto. For example, the mark 122 may represent an ideal balance position of the glasses.

For example, in a case where the balance information is displayed as described above, the control unit 60 may display how much the mean balance position is deviated, as a numerical value, from the balance position of the glasses F. In addition, in a case where the balance information is displayed as described above, the control unit 60 may determine whether or not the balance position of the glasses F is moved from a deviation amount between the balance position of the glasses F and the mean balance position. For example, a predetermined range 123 obtained with the mean balance position as a reference may be set as a permissible range for determining whether or not the balance position is appropriate. For example, in a case where it is determined that to move the balance position, a sentence for urging to move the balance position of the glasses F may be displayed on the display 72.

For example, the operator acquires the balance information and, thus, is able to prescribe the glasses with which the wearer has a good wearing feeling. For example, when there is an opinion that the glasses are likely to slide down from the nose of the wearer, the operator acquires the balance information as described above from the glasses that is currently worn by the wearer. For example, in a case where the wearing feeling of the current glasses of the wearer is improved, the operator may determine a weight of the weight added to the glasses, based on the balance information. The control unit 60 may be configured to calculate the weight of the weight added to the glasses, such that the balance position of the current glasses is coincident with the mean balance position (or ideal balance position). Subsequently, the operator adds the weight to the current glasses of the wearer and acquires reproduction balance information. For example, the operator repeatedly performs the operation, the balance position in the current glasses can be coincident with the mean balance position, and thus it is possible to improve the wearing feeling of the glasses. It is needless to say that the balance position of the current glasses may not need to be coincident with, coincide with the mean balance position depending on the wearing feeling of the wearer.

In addition, in a case where a wearing feeling of glasses that are to be worn by the wearer is to be improved, similarly, the operator acquires balance information of the glasses to be worn. For example, the operator may compare balance information between the current glasses and the glasses to be worn by the wearer and may recommend a use of glasses having the balance position of the glasses to be worn on the rear side (that is, on a side of the temple tip FM of the glasses) from the balance position of the current glasses. Consequently, the operator can consider the wearing feeling of the glasses and can prescribe the glasses that is unlikely to slide down from the nose, to the wearer.

As described above, for example, the glasses measurement apparatus in the example measures the weight of the glasses at two or more positions of the glasses and acquires the barycentric position of the glasses based on the measured weight. Consequently, the operator can adjust the barycentric position of the glasses that the wearer possesses or prescribe the glasses having the barycentric position that is appropriate to the wearer and can easily determine a fitting state of the glasses on a wearer.

In addition, the glasses measurement apparatus in the example measures the weight at two or more positions including the position of the front region of the glasses and the position of the rear region of the glasses, for example. Consequently, it is possible to acquire the weight at the position of the front region of the glasses, which is influenced by a thickness or a weight of the lens framed therein and at the rear region of the glasses and to obtain the center of gravity of the entire glasses, and it is easy to adjust the barycentric position, the balance or the like of the glasses.

In addition, the glasses measurement apparatus in the example measures a weight at both of the left temple tips of the glasses and the right temple tip of the glasses as the positions of the temple tips of the glasses, for example. Consequently, it is possible to acquire the weight at the position of the bridge of the glasses and the weight at the right temple tip and the weight at the left temple tip of the glasses, and it is possible to obtain the center of gravity of the entire glasses accurately obtained from the weight at three points.

In addition, in the glasses measurement apparatus in the example, the measuring portion for measuring the weight of the glasses is disposed at the same position as the supporting portion for supporting the glasses. Therefore, the operator can acquire the weight of the glasses at the position at which the glasses are supported in a simple configuration.

In addition, the acquiring portion may acquire balance information indicating the balance position of the glasses based on the barycentric position of the glasses, for example. In addition, the glasses measurement apparatus may include an output portion for outputting the balance information, for example. Consequently, an operator can easily determine the barycentric position, the balance or the like of the glasses.

<Lens Measuring Mode>

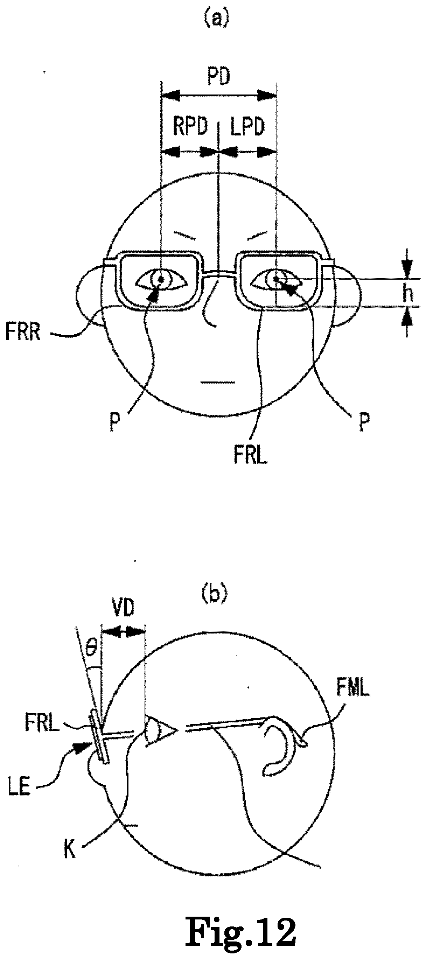

Hereinafter, the lens measuring mode will be described in detail. Fig. 12 is a diagram showing the wearing state in which the wearer is wearing the glasses F. (a) is Fig. 12 is a diagram showing the wearer viewed from front, and (b) in Fig. 12 is a diagram showing the wearer viewed from side. For example, there is an individual difference in a distance from a pupil position P of a wearer to the rim FR (that is, a PD height h of an eye), a distance from the pupil position of the left eye to a pupil position of the right eye of the wearer (that is, an inter-pupil distance PD), a distance from a cornea apex position K of the wearer to the lens back surface (that is, a cornea apex distance VD), an angle of the rim FR that tilts with respect to the Y direction (that is, a pantoscopic angle θ), or the like, and thus the distances, the angle, or the like are different depending on the wearer. It is needless to say that there are various shapes of the glasses F, the PD height h of the eye, the cornea apex distance VD, the pantoscopic angle θ, or the like may change depending on the glasses F. Therefore, even when the glasses are prepared by obtaining a prescription value depending on an objective examination, a subjective examination, or the like, and obtaining a result that it is desirable to prescribe a lens having the spherical power S of -10D to the wearer, the distance or the tilt angle, which are described above, changes, and thus seeing is not actually performed in a state in which the lens of -10D is placed on the front of the eye, for example.

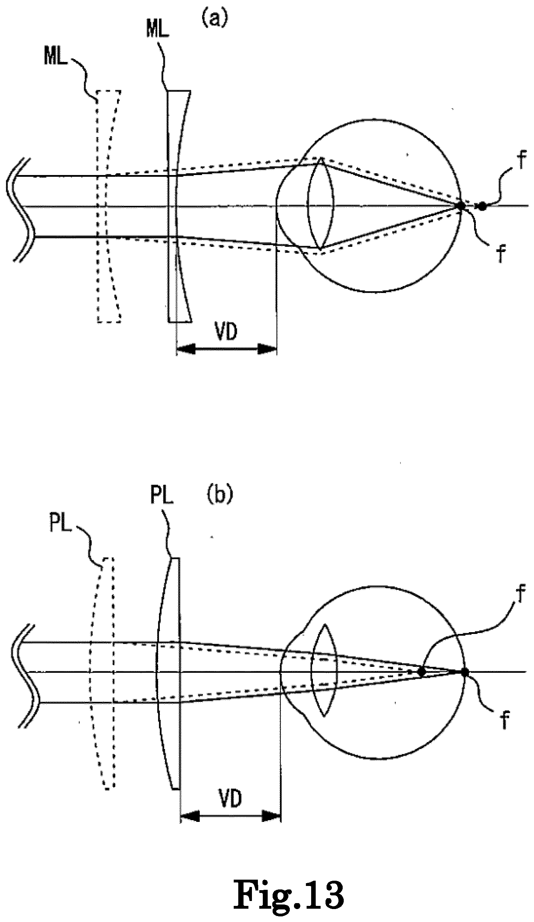

As described above, the change in the cornea apex distance VD is described with an example. Fig. 13 is a diagram showing a relationship between the cornea apex distance VD and the refractive power. (a) in Fig. 13 shows an example of a minus lens, and (b) in Fig. 13 shows an example of a plus lens. For example, as the cornea apex distance VD increases (that is, as movement is performed from a minus lens ML represented by a solid line to a side of the minus lens ML represented by a dotted line) in a state in which the minus lens ML is disposed in front of the eye, a focal position f of a parallel flux incident to the eye is to be positioned deep from the retina. Therefore, in a case where the wearer sees the front side via the minus lens ML, actual vision correction decreases. That is, even when the glasses F, in which the lens of -10D is framed, is worn, the wearer see the front side in the same manner as in a state in which the wearer sees the front side through a lens having lower spherical power than that of -10D (For example, a lens having -9.5D) when the cornea apex distance VD is deviated, for example.

Conversely, as the cornea apex distance VD increases (that is, as movement is performed from a plus lens PL represented by a solid line to a side of the plus lens PL represented by a dotted line) in a state in which the plus lens PL is disposed in front of the eye, a focal position f of a parallel flux incident to the eye is to be positioned in front from the retina. Therefore, in a case where the wearer sees the front side via the plus lens PL, actual vision correction is excessive. That is, even when the glasses F, in which the lens of +10D is framed, is worn, the wearer see the front side in the same manner as in a state in which the wearer sees the front side through a lens having high spherical power than that of +10D (For example, a lens having +10.5D) when the cornea apex distance VD is deviated, for example.

For example, when the cornea apex distance VD changes, the refractive power actually changes as described above. Therefore, in order to prescribe the glasses F having a good vision condition, it is desirable that the wearer, who is wearing the glasses F, acquires the refractive power obtained in a case where the wearer sees the front side via the lens LE framed in the glasses F.

For example, the glasses measurement apparatus 1 in the example sets the lens measuring mode and, thereby, is capable of measuring the refractive power of the wearing state. For example, in this case, in a case where the wearer is wearing the glasses F and sees frontward, refractive powers at both of a point at which a vision axis of the left eye passes through the lens LE for the left eye and a point at which a vision axis of the right eye passes through the lens LE for the right eye are measured. For example, at this time, the control unit 60 does not allow the nosepiece 6 to abut on the lens back surface of the glasses F but disposes the nosepiece 6 based on the cornea apex distance VD of the wearer. It is needless to say that the glasses measurement apparatus 1 causes the nosepiece 6 to abut on a back surface of the lens LE, and is capable of measuring the optical properties of the lens LE framed in the glasses F.

For example, the operator places the glasses F on the front support 21 and the rear support 22 of the glasses supporting unit 3. For example, at this time, the front support 21 and the measurement part 2 are set in advance so as to be disposed at the same position in the left-right direction (X direction).

Subsequently, the operator inputs a glasses-worn parameter in the state in which the wearer is wearing the glasses F by using the operation button 71 displayed on the display 72. For example, examples of the glasses-worn parameter include the inter-pupil distance PD, the PD height h of the eye, the cornea apex distance VD, the pantoscopic angle θ, or the like. For example, the inter-pupil distance PD may be obtained by inputting a distance LPD from the center of the bridge FB of the glasses F to the pupil position of the left eye and a distance RPD from the center of the bridge FB of the glasses F to the pupil position of the right eye. For example, the glasses-worn parameters can be acquired in advance by using the glasses-worn image analyzing apparatus or the like (for example, see JP-A-2015-179254).

For example, when the glasses-worn parameter is input, the control unit 60 moves the glasses supporting unit 3 with respect to the measurement part 2. For example, the control unit 60 drives a motor 50 of the glasses supporting unit 3 based on the inter-pupil distance PD and moves the glasses supporting unit 3 in the left-right direction (X direction). For example, in the example, the control unit 60 moves the glasses supporting unit 3 in a right direction by a distance LPD. Consequently, it is possible to coincide the position of the point at which the vision axis of the left eye of the wearer passes through the lens LE for the left eye with the position of the optical axis L1 of the measurement optical system 10 in the left-right direction.

In addition, the control unit 60 drives the motor 95 of the glasses supporting unit 3 based on the PD height h of the eye and moves the glasses supporting unit 3 in the up-down direction (Y direction), for example. For example, in the example, the glasses supporting unit 3 is moved in the downward direction, and thereby the light receiving element 14 captures an image including a lower portion of the rim FR of the glasses F. For example, the control unit 60 performs an image process on the captured image (for example, edge detection or the like), thereby, detecting a position of the lower end of the rim FR of the glasses F. Then, the control unit 60 moves the glasses supporting unit 3 in the upward direction from the position of the lower portion of the detected rim FR by the PD height of the eye. Consequently, it is possible to coincide the position of the point at which the vision axis of the left eye of the wearer passes through the lens LE for the left eye with the position of the optical axis L1 of the measurement optical system 10 in the up-down direction.

In addition, the control unit 60 drives the motor 28 of the glasses supporting unit 3 based on the cornea apex distance VD and moves the glasses supporting unit 3 in the front-rear direction (Z direction), for example. For example, in the depth direction of the glasses supporting unit 3, a position corresponding to 12 mm (that is, the cornea apex distance when a prescription value is obtained) which is considered as an ideal cornea apex distance generally in Japan is set as an initial position. For example, a movement amount of the nosepiece 6 is set depending on a deviation amount of the cornea apex distance VD of the wearer and the initial position. For example, in a case where the cornea apex distance VD of the wearer is 13 mm, the control unit 60 optically moves the nosepiece 6 by a distance (movement amount) corresponding to 1 mm which is a deviation amount from the initial position. For example, such an optical movement amount may be set from experiments or simulations performed in advance. For example, consequently, it is possible to match a distance from the point at which the vision axis of the left eye of the wearer passes through the lens LE for the left eye to the nosepiece 6 with the cornea apex distance VD of the wearer.

For example, when the glasses-worn parameter is input, the control unit 60 moves the glasses supporting unit 3 with respect to the measurement part 2. For example, the control unit 60 drives the motor 32 of the glasses supporting unit 3 based on the tilt angle θ and causes the glasses supporting unit 3 to tilt in the oblique direction (YZ direction) with respect to the bridge FB of the glasses F as the rotation center. Consequently, it is possible to adjust the pantoscopic angle of the glasses F placed on the glasses supporting unit 4 and the pantoscopic angle θ of the glasses F which is obtained at the wearing state in which the wearer is wearing the glasses F such that the pantoscopic angles are equal (or substantially equal) to each other.

For example, the operator may input head width information of the wearer by using the operation button 71 displayed on the display 72. For example, when the head width information is input, the control unit 60 changes the width W between the rear supports 22. For example, the control unit 60 drives the double-shaft motor 54 of temple adjusting unit based on the head width of the wearer and match the width W between the rear supports 22 with the head width of the wearer. For example, at this time, the control unit 60 may acquire a grip force of the glasses F that grips the head of the wearer, by using a detection sensor attached to the rear support 22. For example, the detected grip force is displayed on the display 72.

For example, the control unit 60 adjusts the pantoscopic angle θ of the glasses F as described above and the deformation of the glasses F due to gripping the head of the wearer by the glasses F, thereby, reproducing the wearing state in which the glasses F is worn on the wearer. A configuration, in which both of the pantoscopic angle and the deformation of the glasses F are adjusted, is described as an example in the above description; however, a configuration, in which at least one thereof is adjusted, may be employed.

For example, when the movement of the measurement part 2 (the measurement optical system 10) and the change of the pantoscopic angle θ and the width W between the rear supports 22 are ended, the light source 11 is turned on, and the control unit 60 measures the optical properties (for example, the spherical power S, the cylindrical power C, the astigmatism axis angle A, the prism amount Δ or the like) of the lens of the glasses F in a state in which the wearing state is reproduced. For example, the optical properties of the lens which are measured as described above is the refractive power in the wearing state in a case where the wearer who is wearing the glasses F sees the front side via the lens LE. For example, the control unit 60 displays the measured optical properties of the lens on the display 72 and stores the optical properties in the memory 75.

For example, when the control unit 60 ends the measurement of the refractive power of the left eye in the wearing state in which the wearer is wearing the glasses F, the control unit also measures a refractive power of the right eye. In this case, the control unit 60 moves the glasses supporting unit 3 in the left direction by the inter-pupil distance PD (that is, a sum of the distance LPD and the distance RPD) after measuring the refractive power of the left eye, for example. In addition, similar to when the control unit 60 measures the refractive power of the left eye, the control unit moves the measurement optical system 10 based on the PD height h of the eye, the cornea apex distance VD, and the pantoscopic angle θ and acquires the refractive power of the right eye in the wearing state in which the wearer is wearing the glasses F.

As described above, for example, the glasses measurement apparatus in the example adjusts at least one of the deformation of the glasses and the pantoscopic angle of the glasses. Consequently, the operator can reproduce the wearing state in which the wearer is wearing the glasses such that the optical properties of the lens of the glasses can be measured. Hence, it is possible to obtain a measurement result with high accuracy in a state close to the wearing state.

In addition, the glasses measurement apparatus in the example moves, in the up-down direction, at least one position of the position of the front region of the glasses and the position of the rear region of the glasses, for example. Consequently, it is possible to change the pantoscopic angle of the glasses to the pantoscopic angle which is obtained in the state in which the wearer is wearing the glasses. For example, a deviation in the pantoscopic angle greatly influences the optical properties of the lens; however, the wearing state is reproduced, and thereby it is possible to obtain the measurement result with high accuracy.

In addition, the glasses measurement apparatus in the example causes the glasses to tilt forward, thereby, changing the pantoscopic angle of the glasses. Consequently, when the wearer is wearing the glasses, it is possible to reproduce the pantoscopic angle of the glasses which changes depending on a position of an ear of the wearer, a type of glasses or the like. Hence, the operator can measure the optical properties of the lens at the pantoscopic angle which is obtained in the wearing state in which the wearer is wearing the glasses.

In addition, the glasses measurement apparatus in the example moves, in the up-down direction, at least one position of the position of the bridge of the glasses and the position of the temple of the glasses, for example. Consequently, it is possible to change the pantoscopic angle of the glasses in a simple configuration.

In addition, the glasses measurement apparatus in the example is capable of changing the pantoscopic angle of the glasses, with respect to the bridge of the glasses as the rotation center. For example, in the wearing state of the glasses, the bridge abutting the nose of the wearer is the rotation center, and thus the position of the temple changes in the up-down direction depending on a height of the ears of the wearer. Consequently, the operator can easily adjust the pantoscopic angle of the glasses to the pantoscopic angle which is obtained in the wearing state.

In addition, the glasses measurement apparatus in the example automatically changes the pantoscopic angle of the glasses based on the pantoscopic angle information of the glasses. Consequently, the operator can easily adjust the pantoscopic angle of the glasses to the pantoscopic angle which is obtained in the wearing state without a complex operation.

In addition, the glasses measurement apparatus in the example moves the position of at least one temple of the right and left temples, thereby changing the width between the right and left temples, for example. Consequently, it is possible to reproduce the deformed shape of the glasses with a widened width between the temples when the wearer is wearing the glasses. Hence, the operator can measure the optical properties of the lens with the width between the temples, which is obtained in the wearing state in which the wearer is wearing the glasses.

In addition, the glasses measurement apparatus in the example automatically moves at least one temple of the right and left temples in the left-right direction based on the head width information of the wearer. Consequently, the operator can easily adjust the width between the temples to the head width of the wearer.

<Modification Example>

In the example, the front support 21 may be configured to support at least one position of the front region of the glasses F and is not limited to supporting the bridge FB. For example, the front support 21 may support the rim FR (the left rim FRL and the right rim FRR). In this case, a configuration may be employed, in which two front supports of a front support that supports the left rim FRL and a front support that supports the right rim FRR are provided. It is needless to say that the front support 21 may support the bridge FB, the rim FR, and the like at a plurality of positions. In this case, a configuration may be employed, in which three front supports support the bridge FB, the left rim FRL and the right rim FRR, respectively, or a configuration may be employed, in which one front support supports the bridge FB, the left rim FRL and the right rim FRR.

In the example, the rear support 22 may be configured to support at least two positions of the rear region of the glasses F and is not limited to supporting only the temple tip FM (the left temple tip FML and the right temple tip FMR). For example, the rear support 22 may support the temple FT (the left temple FTL and the right temple FTR). It is needless to say that the rear support 22 may support the temple tip FM, the temple FT and the like as the rear region of the glasses F at a plurality of positions.

In the example, the configuration, in which the weight is measured at each of the left temple tip FML and the right temple tip FMR of the glasses F, is described as an example; however, the configuration is not limited thereto. For example, since the glasses F have a substantially bilateral symmetry, a configuration in which a weight is measured at one of the right and left temple tips may be employed. For example, in a case where the weight is measured only at the left temple tip FML, the weight at the right temple tip FMR may be substantially equal to the weight at the left temple tip FML. Similarly, in a case where the weight is measured only at the right temple tip FMR, the weight at the left temple tip FML may be substantially equal to the weight at the right temple tip FMR.

In addition, in the example, the configuration in which the measurement sensors (that is, the measurement sensor 4a, the measurement sensor 4b, and the measurement sensor 4c) are provided at three positions of the bridge FB, the left temple tip FML, and the right temple tip FMR on the glasses F is described as an example; however the configuration is not limited thereto. The measurement sensors may measure the weight at each position of the front region and the rear region of the glasses F or several measurement sensors may be disposed.

For example, in the example, the configuration in which the front support 21 and the measurement sensor 4a are integrally formed and the support and the sensor serves as each other is described as an example; however the configuration is not limited thereto. For example, the front support 21 and the measurement sensor 4a may be separately provided from each other. In this case, the measurement sensor 4a may be disposed in the vicinity of the front support 21. It is needless to say that the measurement sensor 4a may be disposed at a position different from the position of the front support 21.

In addition, in the example, the configuration in which the rear support 22 and the measurement sensor 4b, or the rear support 22 and the measurement sensor 4c are integrally formed, and the support and the sensor serve as each other is described as an example; however the configuration is not limited thereto, for example. For example, the measurement sensor 4b may be disposed in the vicinity of the rear support 22 or may be disposed at a position different from the position of the rear support 22. Similarly, the measurement sensor 4c may be disposed in the vicinity of the rear support 22 or may be disposed at a position different from the position of the rear support 22.

In the example, the configuration in which the rear support 22 abuts both of an inner side and an outer side of the temple, and thereby the temple adjusting unit 100 changes the width between the temples FT of the glasses F is described as an example; however, the configuration is not limited thereto. For example, the temple adjusting unit 100 may abut only the inner sides of the right and left temples or may abut only the outer sides of the right and left temples. In addition, the temple adjusting unit 100 may be configured to abut the inner side of one of the right and left temples and abut the outer side of the other thereof, for example.

In addition, in the example, the configuration in which the temple adjusting unit 100 moves positions of both of the right and left temples, thereby changing the width between the temples FT of the glasses F is described as an example; however, the configuration is not limited thereto, for example. For example, the temple adjusting unit 100 may be configured to move at least one of the right and left temples to the inner side (for example, a configuration in which the temples are pushed to the inner side) or may be configured to move at least one of the right and left temples to the outer side (for example, a configuration in which the temples are tensioned to the outer side).

In the example, the configuration in which the balance information is output by being displayed on the display 72 is described as an example; however, the configuration is not limited thereto. For example, the balance information may be output by being printed by using a printer or the like or may be output as data to an external memory.

In the example, the configuration, in which the glasses supporting unit 3 is moved with respect to the measurement part 2, and thereby the optical axis L1 of the measurement optical system 10 is adjusted to be coincident with the point at which the vision axis of the wearer passes through the lens LE of the glasses F, is described as an example; however, the configuration is not limited thereto. For example, a configuration may be employed, in which the measurement part 2 is moved without moving the glasses supporting unit 3, and thereby the optical axis L1 of the measurement optical system 10 is adjusted to be coincident with the point at which the vision axis of the wearer passes through the lens LE of the glasses F.

In the example, the configuration, in which the optical properties of the lens LE are acquired at the point at which the vision axis of the wearer passes through the lens LE of the glasses F, is described as an example; however, the configuration is not limited thereto. For example, the lens LE may be scanned with respect to the nosepiece 6, and the optical properties may be acquired all over the entire lens LE. For example, in this case, the control unit 60 may generate a mapping image indicating the acquired optical properties of the lens LE.

In the example, the configuration, in which the glasses supporting unit 3 is moved in the up-down direction, the left-right direction, and the front-rear direction based on the glasses-worn parameter in the state in which the wearer is wearing the glasses F, is described as an example; however, the configuration is not limited thereto. For example, the glasses supporting unit 3 may be configured to be moved only in the up-down direction and the left-right direction but not to be moved in the front-rear direction. In this case, the refractive power may be computed and obtained in a case where the wearer sees the front side via the lens LE framed in the glasses F, by using the cornea apex distance VD of the wearer.

1      glasses measurement apparatus
3      glasses supporting unit
4      measuring unit
5      drive unit
5b     pantoscopic angle adjusting mechanism
10     measurement optical system
21     front support
22     rear support
60     control unit
75     memory
100    temple adjusting unit

## Claims

1.  A glasses measurement apparatus (1) that measures optical properties of a lens of glasses, comprising

    • a lens measuring portion (10), which is adapted to measure the optical properties of the lens of the glasses in a reproduced wearing state, wherein the wearing state is a state in which the glasses are deformed due to the reaction force of temple portions of the glasses gripping the head of a wearer or in which the pantoscopic angle of the glasses depends on a height of ear of a wearer, a type of glasses, a thickness or a weight of a lens framed in a rim portion of the glasses, or the like when the glasses are worn by a wearer; and

an adjusting portion (5b, 100) adapted for adjusting at least one of deformation of the glasses and a pantoscopic angle of the glasses to reproduce the wearing state of the glasses, wherein the adjusting portion (5b, 100) includes a pantoscopic angle adjusting portion (5b) for changing the pantoscopic angle by moving at least one position of a position of a front region of the glasses and a position of a rear region of the glasses in an up-down direction.

2.  The glasses measurement apparatus (1) according to claim 1,
    wherein the pantoscopic angle adjusting portion (5b) is adapted to change the pantoscopic angle by moving at least one position of a position of a bridge of the glasses as the position of the front region of the glasses and a position of a temple of the glasses as the position of the rear region of the glasses in the up-down direction.

3.  The glasses measurement apparatus (1) according to claim 2,
    wherein the pantoscopic angle adjusting portion (5b) is adapted to move the position of the temple in the up-down direction with respect to the bridge of the glasses as a rotation center.

4.  The glasses measurement apparatus (1) according to any one of claims 1 to 3, further comprising:

    a pantoscopic angle acquiring portion (60) adapted to acquire pantoscopic angle information of the glasses when the wearer is wearing the glasses,
    wherein the pantoscopic angle adjusting portion (5b) is adapted to change the pantoscopic angle based on the pantoscopic angle information acquired by the pantoscopic angle acquiring portion.

5.  The glasses measurement apparatus (1) according to any one of claims 1 to 4,
    wherein the adjusting portion includes a temple adjusting portion (100) adapted for abutting at least one of right and left temples of the glasses, and adapted for changing a width between the right and left temples by moving a position of at least one temple of the right and left temples.

**6.** The glasses measurement apparatus (1) according to claim 5, further comprising:

> a head width acquiring portion adapted for acquiring head width information of the wearer who wears the glasses,
> wherein the temple adjusting portion (100) is adapted to move at least one temple of the right and left temples in a left-right direction based on the head width information acquired by the head width acquiring portion.

**7.** The glasses measurement apparatus (1) according to any one of claims 1 to 6, further comprising:

> a supporting portion (3) adapted for supporting the glasses;
> a weight measuring portion adapted for measuring a weight of the glasses at two or more positions of the glasses; and
> an acquiring portion adapted for acquiring a barycentric position of the glasses based on the weight measured by the weight measuring portion.

**8.** The glasses measurement apparatus (1) according to claim 7,
wherein the weight measuring portion is adapted to measure a weight at two or more positions including the position of the front region of the glasses and the position of the rear region of the glasses.

**9.** The glasses measurement apparatus (1) according to claim 8,
wherein the weight measuring portion is adapted to measure a weight at a position of the bridge of the glasses as the position of the front region of the glasses and measures a weight at a position of a temple tip of the glasses as the position of the rear region of the glasses.

**10.** The glasses measurement apparatus (1) according to claim 9,
wherein the weight measuring portion is adapted to measure each weight at least at a left temple tip of the glasses and a right temple tip of the glasses as the position of the temple tip of the glasses.

**11.** The glasses measurement apparatus (1) according to any one of claims 7 to 10,

> wherein the weight measuring portion is disposed on the supporting portion, and
> the measuring portion is adapted to measure a weight at a position where the supporting portion supports the glasses.

**12.** The glasses measurement apparatus (1) according to any one of claims 7 to 11,

> wherein the weight acquiring portion is adapted to acquire balance information indicating a balance position of the glasses, based on the barycentric position of the glasses, and
> the glasses measurement apparatus further comprises an output portion (72) adapted for outputting the balance information.

**13.** The glasses measurement apparatus (1) according to any one of the previous claims, wherein the adjusting portion (5b, 100) is configured to adjust both, the deformation of the glasses and the pantoscopic angle of the glasses to reproduce the wearing state of the glasses.


**Patentansprüche**

**1.** Brillenmessvorrichtung (1), die optische Eigenschaften einer Brille misst, umfassend

> • einen Linsenmessabschnitt (10), der angepasst ist, um die optischen Eigenschaften der Linse der Brille in einem reproduzierten Tragezustand zu messen, wobei der Tragezustand ein Zustand ist, in dem die Brille aufgrund der Reaktionskraft von Schläfenabschnitten der Brille, die den Kopf eines Trägers greifen, verformt wird oder in dem der pantoskopische Winkel der Brille von einer Ohrhöhe eines Trägers, einem Brillentyp, einer Dicke oder einem Gewicht einer Linse, die in einem Randabschnitt der Brille eingerahmt ist, oder dergleichen abhängt, wenn die Brille von einem Träger getragen wird; und

> einen Einstellabschnitt (5b, 100), der angepasst ist, um mindestens eines von einer Verformung der Brille und einem pantoskopischen Winkel der Brille einzustellen, um den Tragezustand der Brille zu reproduzieren, wobei der Einstellabschnitt (5b, 100) einen pantoskopischen Winkeleinstellabschnitt (5b) zum Ändern des pantoskopischen Winkels durch Bewegen mindestens einer Position einer Position eines vorderen Bereichs der Brille und einer Position eines hinteren Bereichs der Brille in einer Oben-Unten-Richtung umfasst.

**2.** Brillenmessvorrichtung (1) nach Anspruch 1,
wobei der pantoskopische Winkeleinstellabschnitt (5b) angepasst ist, um den pantoskopischen Winkel durch Bewegen mindestens einer Position einer Position einer Brücke der Brille als die Position des vorderen Bereichs der Brille und einer Position eines Schläfens der Brille als die Position des hinteren Bereichs der Brille in der Oben-Unten-Richtung zu ändern.

3. Brillenmessvorrichtung (1) nach Anspruch 2, wobei der pantoskopische Winkeleinstellabschnitt (5b) angepasst ist, um die Position des Schläfens in der Oben-Unten-Richtung in Bezug auf die Brücke der Brille als ein Drehzentrum zu bewegen.

4. Brillenmessvorrichtung (1) nach einem der Ansprüche 1 bis 3, ferner umfassend:

einen pantoskopischen Winkelerfassungsabschnitt (60), der angepasst ist, um pantoskopische Winkelinformationen der Brille zu erfassen, wenn der Träger die Brille trägt, wobei der pantoskopische Winkeleinstellabschnitt (5b) angepasst ist, um den pantoskopischen Winkel basierend auf den durch den pantoskopischen Winkelerfassungsabschnitt erfassten pantoskopischen Winkelinformationen zu ändern.

5. Brillenmessvorrichtung (1) nach einem der Ansprüche 1 bis 4, wobei der Einstellabschnitt einen Schläfeneinstellabschnitt (100) umfasst, der angepasst ist, um an mindestens einem von rechten und linken Schläfen der Brille anzuliegen, und angepasst ist, um eine Breite zwischen den rechten und linken Schläfen durch Bewegen einer Position von mindestens einem Schläfen der rechten und linken Schläfen zu ändern.

6. Brillenmessvorrichtung (1) nach Anspruch 5, ferner umfassend:

einen Kopfbreitenerfassungsabschnitt, der angepasst ist, um Kopfbreiteninformationen des Trägers, der die Brille trägt, zu erfassen, wobei der Schläfeneinstellabschnitt (100) angepasst ist, um mindestens einen Schläfen der rechten und linken Schläfen in einer Links-Rechts-Richtung basierend auf den durch den Kopfbreitenerfassungsabschnitt erfassten Kopfbreiteninformationen zu bewegen.

7. Brillenmessvorrichtung (1) nach einem der Ansprüche 1 bis 6, ferner umfassend:

einen Stützabschnitt (3), der angepasst ist, um die Brille zu stützen; einen Gewichtsmessabschnitt, der angepasst ist, um ein Gewicht der Brille an zwei oder mehr Positionen der Brille zu messen, und einen Erfassungsabschnitt, der angepasst ist, um eine baryzentrische Position der Brille basierend auf dem durch den Gewichtsmessabschnitt gemessenen Gewicht zu erfassen.

8. Brillenmessvorrichtung (1) nach Anspruch 7, wobei der Gewichtsmessabschnitt angepasst ist, um ein Gewicht an zwei oder mehr Positionen einschließlich der Position des vorderen Bereichs der Brille und der Position des hinteren Bereichs der Brille zu messen.

9. Brillenmessvorrichtung (1) nach Anspruch 8, wobei der Gewichtsmessabschnitt angepasst ist, um ein Gewicht an einer Position der Brücke der Brille als die Position des vorderen Bereichs der Brille zu messen und ein Gewicht an einer Position einer Schläfenspitze der Brille als die Position des hinteren Bereichs der Brille zu messen.

10. Brillenmessvorrichtung (1) nach Anspruch 9, wobei der Gewichtsmessabschnitt angepasst ist, um jedes Gewicht an mindestens einer linken Schläfenspitze der Brille und einer rechten Schläfenspitze der Brille als die Position der Schläfenspitze der Brille zu messen.

11. Brillenmessvorrichtung (1) nach einem der Ansprüche 7 bis 10,

wobei der Gewichtsmessabschnitt auf dem Stützabschnitt angeordnet ist, und der Messabschnitt angepasst ist, um ein Gewicht an einer Position zu messen, an der der Stützabschnitt die Brille stützt.

12. Brillenmessvorrichtung (1) nach einem der Ansprüche 7 bis 11,

wobei der Gewichtserfassungsabschnitt angepasst ist, um Auswuchtinformationen, die eine Auswuchtposition der Brille angeben, basierend auf der baryzentrischen Position der Brille zu erfassen, und die Brillenmessvorrichtung ferner einen Ausgabeabschnitt (72) umfasst, der angepasst ist, um die Auswuchtinformationen auszugeben.

13. Brillenmessvorrichtung (1) nach einem der vorhergehenden Ansprüche, wobei der Einstellabschnitt (5b, 100) konfiguriert ist, um sowohl die Verformung der Brille als auch den pantoskopischen Winkel der Brille einzustellen, um den Tragezustand der Brille zu reproduzieren.

## Revendications

1. Appareil de mesure de lunettes (1) qui mesure des propriétés optiques d'un verre de lunettes, comprenant

• une partie de mesure de verre (10), qui est adaptée pour mesurer les propriétés optiques du verre des lunettes dans un état de port reproduit, dans lequel l'état de port est un état dans lequel les lunettes sont déformées en raison de la force de réaction de parties de branche des lunettes saisissant la tête d'un porteur ou dans lequel l'angle pantoscopique des lunettes dépend d'une hauteur d'oreille d'un porteur, d'un type de lunettes, d'une épaisseur ou d'un poids d'un verre encadré dans une partie de bord des lunettes, ou similaire lorsque les lunettes sont portées par un porteur ; et

une partie d'ajustement (5b, 100) adaptée pour ajuster au moins l'un d'une déformation des lunettes et d'un angle pantoscopique des lunettes pour reproduire l'état de port des lunettes, dans lequel la partie d'ajustement (5b, 100) comprend une partie d'ajustement d'angle pantoscopique (5b) pour changer l'angle pantoscopique en déplaçant au moins une position d'une position d'une région avant des lunettes et d'une position d'une région arrière des lunettes dans une direction haut-bas.

2. Appareil de mesure de lunettes (1) selon la revendication 1,
dans lequel la partie d'ajustement d'angle pantoscopique (5b) est adaptée pour changer l'angle pantoscopique en déplaçant au moins une position d'une position d'un pont des lunettes en tant que position de la région avant des lunettes et d'une position d'une branche des lunettes en tant que position de la région arrière des lunettes dans la direction haut-bas.

3. Appareil de mesure de lunettes (1) selon la revendication 2,
dans lequel la partie d'ajustement d'angle pantoscopique (5b) est adaptée pour déplacer la position de la branche dans la direction haut-bas par rapport au pont des lunettes en tant que centre de rotation.

4. Appareil de mesure de lunettes (1) selon l'une quelconque des revendications 1 à 3, comprenant en outre :

une partie d'acquisition d'angle pantoscopique (60) adaptée pour acquérir des informations d'angle pantoscopique des lunettes lorsque le porteur porte les lunettes,
dans lequel la partie d'ajustement d'angle pantoscopique (5b) est adaptée pour changer l'angle pantoscopique sur la base des informations d'angle pantoscopique acquises par la partie d'acquisition d'angle pantoscopique.

5. Appareil de mesure de lunettes (1) selon l'une quelconque des revendications 1 à 4,

dans lequel la partie d'ajustement comprend une partie d'ajustement de branche (100) adaptée pour venir en butée contre au moins l'une des branches droite et gauche des lunettes, et adaptée pour changer une largeur entre les branches droite et gauche en déplaçant une position d'au moins une branche des branches droite et gauche.

6. Appareil de mesure de lunettes (1) selon la revendication 5, comprenant en outre :

une partie d'acquisition de largeur de tête adaptée pour acquérir des informations de largeur de tête du porteur qui porte les lunettes,
dans lequel la partie d'ajustement de branche (100) est adaptée pour déplacer au moins une branche des branches droite et gauche dans une direction gauche-droite sur la base des informations de largeur de tête acquises par la partie d'acquisition de largeur de tête.

7. Appareil de mesure de lunettes (1) selon l'une quelconque des revendications 1 à 6, comprenant en outre :

une partie de support (3) adaptée pour supporter les lunettes ;
une partie de mesure de poids adaptée pour mesurer un poids des lunettes au niveau de deux positions ou plus des lunettes ; et
une partie d'acquisition adaptée pour acquérir une position barycentrique des lunettes sur la base du poids mesuré par la partie de mesure de poids.

8. Appareil de mesure de lunettes (1) selon la revendication 7,
dans lequel la partie de mesure de poids est adaptée pour mesurer un poids au niveau de deux positions ou plus comprenant la position de la région avant des lunettes et la position de la région arrière des lunettes.

9. Appareil de mesure de lunettes (1) selon la revendication 8,
dans lequel la partie de mesure de poids est adaptée pour mesurer un poids au niveau d'une position du pont des lunettes en tant que position de la région avant des lunettes et mesure un poids au niveau d'une position d'une pointe de branche des lunettes en tant que position de la région arrière des lunettes.

10. Appareil de mesure de lunettes (1) selon la revendication 9,
dans lequel la partie de mesure de poids est adaptée pour mesurer chaque poids au moins au niveau d'une pointe de branche gauche des lunettes et d'une pointe de branche droite des lunettes en tant que position de la pointe de branche des lunettes.

11. Appareil de mesure de lunettes (1) selon l'une quelconque des revendications 7 à 10,

dans lequel la partie de mesure de poids est disposée sur la partie de support, et la partie de mesure est adaptée pour mesurer un poids au niveau d'une position où la partie de support supporte les lunettes.

12. Appareil de mesure de lunettes (1) selon l'une quelconque des revendications 7 à 11,

dans lequel la partie d'acquisition de poids est adaptée pour acquérir des informations d'équilibre indiquant une position d'équilibre des lunettes, sur la base de la position barycentrique des lunettes, et l'appareil de mesure de lunettes comprend en outre une partie de sortie (72) adaptée pour délivrer en sortie les informations d'équilibre.

13. Appareil de mesure de lunettes (1) selon l'une quelconque des revendications précédentes, dans lequel la partie d'ajustement (5b, 100) est configurée pour ajuster à la fois la déformation des lunettes et l'angle pantoscopique des lunettes pour reproduire l'état de port des lunettes.

Fig.1

**Fig.2**

# Fig.3

**Fig.4**

**Fig.5**

**Fig.6**

**Fig.7**

Fig.8

**Fig.9**

Fig.10

**Fig.11**

Fig.12

**Fig.13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008241694 A
- US 5855074 A
- DE 102015220931 A1
- WO 2006029875 A1
- JP 2015179254 A
- JP 2007264207 A